(19) Europäisches Patentamt
European Patent Office
Office européen des brevets

(11) **EP 4 561 234 A1**

(12) **EUROPEAN PATENT APPLICATION**
published in accordance with Art. 153(4) EPC

(43) Date of publication:
**28.05.2025 Bulletin 2025/22**

(21) Application number: **23870318.5**

(22) Date of filing: **13.09.2023**

(51) International Patent Classification (IPC):
*H04W 72/0446* *(2023.01)*

(52) Cooperative Patent Classification (CPC):
**H04W 72/0446; H04W 72/56; H04W 76/27;
H04W 76/28**

(86) International application number:
**PCT/CN2023/118407**

(87) International publication number:
**WO 2024/067081 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.09.2022 CN 202211196995
07.03.2023 CN 202310247905**

(71) Applicant: **Huawei Technologies Co., Ltd.
Shenzhen, Guangdong 518129 (CN)**

(72) Inventors:
- **CHEN, Erkai
  Shenzhen, Guangdong 518129 (CN)**
- **MADIER, Louis
  Shenzhen, Guangdong 518129 (CN)**
- **QIN, Yi
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **MUSIM GAP PROCESSING METHOD AND DEVICE**

(57) An MUSIM gap processing method and an apparatus are provided. The method includes: determining a first multiple subscriber identity module MUSIM gap; and when the first MUSIM gap and a first time domain resource for carrying a channel or a signal overlap, determining, based on a first priority and a second priority, whether to deactivate the first MUSIM gap, where the first priority is a priority of the first MUSIM gap, and the second priority is a priority of the channel or the signal. In this way, service transmission of a resource overlapping part can be less affected, to ensure service performance.

400

S410: Determine a first multiple subscriber identity module MUSIM gap

S420: When the first MUSIM gap and a first time domain resource for carrying a channel or a signal overlap, determine, based on a first priority and a second priority, whether to deactivate the first MUSIM gap

FIG. 4

EP 4 561 234 A1

## Description

This application claims priorities to Chinese Patent Application No. 202211196995.4, filed with the China National Intellectual Property Administration on September 28, 2022 and entitled "MUSIM GAP PROCESSING METHOD AND APPARATUS", and to Chinese Patent Application No. 202310247905.8, filed with the China National Intellectual Property Administration on March 7, 2023 and entitled "MUSIM GAP PROCESSING METHOD AND APPARATUS", both of which are incorporated herein by reference in their entireties.

## TECHNICAL FIELD

Embodiments of this application relate to the communication field, and more specifically, to an MUSIM gap processing method and an apparatus.

## BACKGROUND

In recent years, a terminal device with a multiple subscriber identity module (multiple subscriber identity module, MUSIM) is increasingly popular. If the terminal device with the MUSIM keeps in a radio resource control (radio resource control, RRC) layer connected state in a network A, and needs to be temporarily handed over to a network B, the terminal device A with the MUSIM may communicate with the network B in an MUSIM gap (MUSIM gap) by using an MUSIM gap configuration.

However, currently, when a time domain resource for communication between the terminal device A and the network A conflicts with the MUSIM gap, the terminal device A preferentially communicates with the network B in the MUSIM gap. When a service transmitted on the time domain resource on which the conflict occurs is a delay-sensitive service, this manner greatly affects receiving or sending of data of the delay-sensitive service by the terminal device A.

Therefore, how to less affect service transmission of a resource overlap when a resource overlap occurs between an MUSIM gap for communication between an MUSIM device and the network B and a time domain resource for communication between the MUSIM device and the network A is an urgent problem to be resolved.

## SUMMARY

Embodiments of this application provide an MUSIM gap processing method and an apparatus, to reduce impact on service transmission on a resource overlapping part, so as to ensure service performance.

According to a first aspect, a communication method is provided. The method may be performed by a communication device (for example, a network device or a terminal device), or may be performed by a chip or a circuit used for the communication device, or may be implemented by a logical module or software that can implement all or a part of functions of the communication device. This is not limited in this application.

The method may include: determining a first multiple subscriber identity module MUSIM gap; and when the first MUSIM gap and a first time domain resource for carrying a channel or a signal overlap, determining, based on a first priority and a second priority, whether to deactivate the first MUSIM gap, where the first priority is a priority of the first MUSIM gap, and the second priority is a priority of the channel or the signal.

It should be understood that, that the first MUSIM gap and the first time domain resource overlap may be that the first MUSIM gap and the first time domain resource completely or partially overlap.

For example, when the first MUSIM gap is deactivated, transmission of a corresponding channel or signal is maintained on an overlapping part of the first time domain resource.

In the foregoing technical solution, when the MUSIM gap and the first time domain resource overlap, whether to deactivate the MUSIM gap is determined based on the priority of the MUSIM gap and the priority of the channel or the signal on the first time domain resource. In comparison with a case in which it is considered by default that the MUSIM gap is in an active state, this preferentially ensures that cell identification, measurement, and paging monitoring are performed on a network B in a time period corresponding to the MUSIM gap. The foregoing solution can reduce impact on service data transmission, to improve service performance, especially for a delay-sensitive service, for example, an XR service.

With reference to the first aspect, in some implementations of the first aspect, the determining, based on the first priority and the second priority, whether to deactivate the first MUSIM gap includes: when the first priority is a low priority and the second priority is a high priority, deactivating the first MUSIM gap.

In the foregoing technical solution, the priority of the first MUSIM gap and the priority of the channel or the signal on the first time domain resource are comprehensively considered, so that whether to deactivate the first MUSIM gap can be more appropriately determined, to improve signal and signal transmission performance.

With reference to the first aspect, in some implementations of the first aspect, the method may further include: receiving first configuration information; and determining the first priority based on the first configuration information.

In the foregoing technical solution, the priority of the first MUSIM gap is determined by using the first configuration information. This may improve flexibility of determining the first priority based on an actual requirement.

With reference to the first aspect, in some implementations of the first aspect, the determining the first priority based on the first configuration information includes: the first configuration information is used for configuring a first priority value and a first priority threshold of the first MUSIM gap; and determining the first priority based on the first priority value and the first priority threshold.

For example, when the first priority value is greater than or equal to the first priority threshold, the first priority is a high priority. When the first priority value is less than the first priority threshold, the first priority is a low priority.

In the foregoing technical solution, the priority of the first MUSIM gap is determined by using the first priority value and the first priority threshold. This may further improve the flexibility of determining the first priority.

With reference to the first aspect, in some implementations of the first aspect, the determining the first priority based on the first configuration information includes: the first configuration information is used for configuring a second priority value of the first MUSIM gap; and determining the first priority based on the second priority value.

In the foregoing technical solution, the priority of the first MUSIM gap is determined by using the second priority value, and less priority parameter configuration information is transmitted. This may not only improve the flexibility of determining the first priority, but also reduce an amount of data transmitted by using the configuration information.

For example, when the second priority value is "Value 1", the first priority is a high priority. When the second priority value is "Value2", the first priority is a low priority. For example, if Value=1, the first priority is a high priority; or if Value=0, the first priority is a low priority.

With reference to the first aspect, in some implementations of the first aspect, the method may further include: receiving second configuration information, where the second configuration information configures a first offset; and the determining whether to deactivate the first MUSIM gap includes: determining, at a first moment, whether to deactivate the first MUSIM gap, where the first moment is before a start moment of the first MUSIM gap, and a time interval between the first moment and the start moment is greater than or equal to the first offset.

In the foregoing technical solution, it can be ensured, by using the first offset, that the terminal device determines in time whether to deactivate the first MUSIM gap, to reduce impact of a processing delay on the terminal device caused by carrier frequency switching required by the terminal device to perform inter-frequency measurement.

With reference to the first aspect, in some implementations of the first aspect, the determining whether to deactivate the first MUSIM gap includes: performing MUSIM gap measurement in a non-overlapping time period between the first MUSIM gap and the first time domain resource, and deactivating a part of the first MUSIM gap.

With reference to the first aspect, in some implementations of the first aspect, the performing MUSIM gap measurement includes: when the non-overlapping time period is greater than a first threshold, performing MUSIM gap measurement, where the non-overlapping time period includes a time period from the start moment of the first MUSIM gap to a start moment of the first time domain resource.

With reference to the first aspect, in some implementations of the first aspect, the performing MUSIM gap measurement includes: when the non-overlapping time period is greater than a second threshold, performing MUSIM gap measurement, where the non-overlapping time period includes a time period from an end moment of the first time domain resource to an end moment of the first MUSIM gap.

In the foregoing technical solution, when data transmission of a high priority is ensured, MUSIM gap measurement is performed in the non-overlapping time period. This may reduce impact on the MUSIM gap measurement.

With reference to the first aspect, in some implementations of the first aspect, the determining whether to deactivate the first MUSIM gap includes: when a time period from a start moment of the first time domain resource to an end moment of the first MUSIM gap is less than a third threshold, performing MUSIM gap measurement on a part of the first MUSIM gap.

In the foregoing technical solution, when an overlapping time period between the time domain resource and the MUSIM gap is less than the third threshold, data transmission is delayed and MUSIM gap measurement is performed. This may reduce impact on the MUSIM gap measurement.

According to a second aspect, a communication method is provided. The method may be performed by a communication device (for example, a network device or a terminal device), or may be performed by a chip or a circuit used for the communication device, or may be implemented by a logical module or software that can implement all or a part of functions of the communication device. This is not limited in this application.

The method may include: determining a second multiple subscriber identity module MUSIM gap; and when the second MUSIM gap and a second time domain resource overlap, determining, based on a third priority and/or a fourth priority, whether to deactivate the second MUSIM gap, where a duration of the second time domain resource is a running duration of a first timer in discontinuous reception (discontinuous reception, DRX), the third priority is a priority of the second MUSIM gap, and the fourth priority is a priority of a channel or a signal that triggers or is associated with starting or restarting of the first timer.

It should be understood that the channel or the signal that triggers the starting or the restarting of the first timer indicates that the starting or the restarting of the first timer is directly triggered by the channel or the signal.

It should be understood that, the signal or the signal that is associated with the starting or the restarting of the first timer indicates that the starting or the restarting of the first timer is indirectly triggered by the channel or the signal.

For example, the first timer may be any one of a DRX inactivity timer (drx-InactivityTimer), a DRX retransmission downlink timer (drx-RetransmissionTimerDL), or a DRX retransmission uplink timer (drx-RetransmissionTimerUL).

In the foregoing technical solution, when the MUSIM gap and the second time domain resource overlap, whether to deactivate the MUSIM gap is determined based on the priority of the MUSIM gap and the priority of the channel or the signal that triggers or is associated with the starting or the restarting of the first timer. In comparison with a case in which it is considered by default that the MUSIM gap is in an active state, this preferentially ensures that cell identification, measurement, and paging monitoring are performed on a network B in a time period corresponding to the MUSIM gap. The foregoing solution can reduce impact on service data transmission, to improve service performance, especially for a delay-sensitive service, for example, an XR service.

With reference to the second aspect, in some implementations of the second aspect, the determining, based on a third priority and/or a fourth priority, whether to deactivate the second MUSIM gap includes: when the third priority is a low priority and the fourth priority is a high priority, deactivating the second MUSIM gap.

In the foregoing technical solution, the priority of the second MUSIM gap and the priority of the channel or the signal related to the first timer are comprehensively considered, so that whether to deactivate the second MUSIM gap can be more appropriately determined, to improve service transmission performance on the first timer.

With reference to the second aspect, in some implementations of the second aspect, the determining, based on a third priority and/or a fourth priority, whether to deactivate the second MUSIM gap includes: when the third priority is a low priority, deactivating the second MUSIM gap.

In the foregoing technical solution, only the priority of the second MUSIM gap is considered. This may not only reduce a delay of determining whether to deactivate the second MUSIM gap, but also improve the service transmission performance on the first timer.

With reference to the second aspect, in some implementations of the second aspect, the determining, based on a third priority and/or a fourth priority, whether to deactivate the second MUSIM gap includes: when the fourth priority is a high priority, deactivating the second MUSIM gap.

In the foregoing technical solution, only the priority of the channel or the signal related to the first timer is considered. This may not only reduce a delay of determining whether to deactivate the second MUSIM gap, but also improve the service transmission performance on the first timer.

With reference to the second aspect, in some implementations of the second aspect, the method further includes: receiving third configuration information; and determining the third priority based on the third configuration information.

In the foregoing technical solution, the priority of the second MUSIM gap is determined by using the third configuration information. This may improve flexibility of determining the third priority based on an actual requirement.

With reference to the second aspect, in some implementations of the second aspect, the determining the third priority based on the third configuration information includes: configuring a third priority value and a second priority threshold of the second MUSIM gap based on the third configuration information; and determining the third priority based on the third priority value and the second priority threshold.

In the foregoing technical solution, the priority of the second MUSIM gap is determined by using the third priority value and the second priority threshold. This may further improve the flexibility of determining the third priority.

With reference to the second aspect, in some implementations of the second aspect, the determining the third priority based on the third configuration information includes: configuring a fourth priority value of the second MUSIM gap based on the third configuration information; and determining the third priority based on the fourth priority value.

In the foregoing technical solution, the priority of the second MUSIM gap is determined by using the fourth priority value, and less priority parameter configuration information is transmitted. This may not only improve the flexibility of determining the third priority, but also reduce an amount of data transmitted by using the configuration information.

With reference to the second aspect, in some implementations of the second aspect, the method further includes: receiving fourth configuration information, where the fourth configuration information configures a second offset; and the determining whether to deactivate the second MUSIM gap includes: determining, at a second moment, whether to deactivate the second MUSIM gap, where the second moment is before a start moment of the second MUSIM gap, and a time interval between the second moment and the start moment is greater than or equal to the second offset.

In the foregoing technical solution, it can be ensured, by using the second offset, that the terminal device determines in time whether to deactivate the second MUSIM gap, to reduce impact of a processing delay on the terminal device caused by carrier frequency switching required by the terminal device to perform inter-frequency measurement.

With reference to the second aspect, in some implementations of the second aspect, the determining whether to deactivate the second MUSIM gap includes: performing MUSIM gap measurement in a non-overlapping time period between the second MUSIM gap and the second time domain resource, and deactivating a part of the second MUSIM gap.

With reference to the second aspect, in some implementations of the second aspect, the performing MUSIM gap measurement includes: when the non-overlapping time period is greater than a first threshold, performing MUSIM gap measurement, where the non-overlapping time period includes a time period from the start moment of the second MUSIM gap to a start moment of the second time domain resource.

With reference to the second aspect, in some implementations of the second aspect, the performing MUSIM gap measurement includes: when the non-overlapping time period is greater than a second threshold, performing MUSIM gap measurement, where the non-overlapping time period includes a time period from an end moment of the second time domain resource to an end moment of the second MUSIM gap.

In the foregoing technical solution, when data transmission of a high priority is ensured, MUSIM gap measurement is performed in the non-overlapping time period. This may reduce impact on the MUSIM gap measurement.

With reference to the second aspect, in some implementations of the second aspect, the determining whether to deactivate the second MUSIM gap includes: when a time period from a start moment of the second time domain resource to an end moment of the second MUSIM gap is less than a third threshold, performing MUSIM gap measurement on a part of the second MUSIM gap.

In the foregoing technical solution, when an overlapping time period between the time domain resource and the MUSIM gap is less than the third threshold, data transmission is delayed and MUSIM gap measurement is performed. This may reduce impact on the MUSIM gap measurement.

According to a third aspect, a communication method is provided. The communication method may be performed by a network device, or may be performed by a chip or a circuit of the network device, or may be implemented by a logical module or software that can implement all or a part of functions of the network device. This is not limited in this application. For ease of description, the following uses an example in which the method is performed by the network device for description.

The method includes: determining first configuration information, where the first configuration information indicates a terminal device to determine a priority of a first MUSIM gap; and sending the first configuration information.

In the foregoing technical solution, the network device sends the first configuration information, to help the terminal device determine the priority of the first MUSIM gap, so that when the first MUSIM gap and a first time domain resource overlap, the terminal device determines whether to deactivate the first MUSIM gap, to ensure transmission performance of a channel or a signal on the first time domain resource.

With reference to the third aspect, in some implementations of the third aspect, a first priority value and a first priority threshold of the first MUSIM gap are configured based on the first configuration information.

With reference to the third aspect, in some implementations of the third aspect, a second priority value of the first MUSIM gap is configured based on the first configuration information.

With reference to the third aspect, in some implementations of the third aspect, the method further includes: sending second configuration information, where the second configuration information configures a first offset, the first offset is used by the terminal device to determine a first moment at which the terminal device determines whether to deactivate the first MUSIM gap, the first moment is before a start moment of the first MUSIM gap, and a time interval between the first moment and the start moment is greater than or equal to the first offset.

In the foregoing technical solution, it can be ensured, by using the first offset, that the terminal device determines in time whether to deactivate the first MUSIM gap, to reduce impact of a processing delay on the terminal device caused by carrier frequency switching required by the terminal device to perform inter-frequency measurement.

According to a fourth aspect, a communication method is provided. The communication method may be performed by a network device, or may be performed by a chip or a circuit of the network device, or may be implemented by a logical module or software that can implement all or a part of functions of the network device. This is not limited in this application. For ease of description, the following uses an example in which the method is performed by the network device for description.

The method includes: determining third configuration information, where the third configuration information indicates a terminal device to determine a priority of a second MUSIM gap; and sending the third configuration information.

In the foregoing technical solution, the network device sends the third configuration information, to help the terminal device determine the priority of the second MUSIM gap, so that when the second MUSIM gap and a second time domain resource overlap, the terminal device determines whether to deactivate the second MUSIM gap, to ensure transmission performance of a channel or a signal on the second time domain resource.

With reference to the fourth aspect, in some implementations of the fourth aspect, a third priority value and a second priority threshold of the second MUSIM gap are configured based on the third configuration information.

With reference to the fourth aspect, in some implementations of the fourth aspect, a fourth priority value of the second MUSIM gap is configured based on the third configuration information.

With reference to the fourth aspect, in some implementations of the fourth aspect, the method further includes: sending fourth configuration information, where the fourth configuration information configures a second offset, the second offset is used by the terminal device to determine a second moment at which the terminal device determines whether to deactivate the second MUSIM gap, the second moment is before a start moment of the second MUSIM gap, and a time interval between the second moment and the start moment is greater than or equal to the second offset.

In the foregoing technical solution, it can be ensured, by using the second offset, that the terminal device determines in time whether to deactivate the second MUSIM gap, to reduce impact of a processing delay on the terminal device caused by carrier frequency switching required by the terminal device to perform interfrequency measurement.

According to a fifth aspect, a communication method is provided. The communication method may be performed by a network device, or may be performed by a chip or a circuit of the network device, or may be implemented by a logical module or software that can implement all or a part of functions of the network device. This is not limited in this application. For ease of description, the following uses an example in which the method is performed by the network device for description.

The method may include: when a third MUSIM gap and a third time domain resource overlap, determining whether to deactivate the third MUSIM gap; and sending first downlink control information, where the first downlink control information indicates whether to deactivate the third MUSIM gap.

In the foregoing technical solution, when the MUSIM gap and the third time domain resource overlap, after determining whether to deactivate the third MUSIM gap, the network device dynamically indicates, by using the downlink control information, the terminal device whether to deactivate the third MUSIM gap, so that the terminal device can more flexibly choose to continue to perform service data transmission with a network A on an overlapping part of the time domain resource, or perform cell identification, measurement, or paging monitoring on a cell of a network B.

With reference to the fifth aspect, in some implementations of the fifth aspect, the sending first downlink control information includes: sending the first downlink control information at a third moment, where the third moment is before a start moment of the third MUSIM gap, and a time interval between the third moment and the start moment is greater than or equal to a third offset.

According to a sixth aspect, a communication apparatus is provided. The apparatus is configured to perform the method provided in any one of the possible implementations of the first aspect. Specifically, the apparatus may include units and/or modules configured to perform the method provided in any one of the possible implementations of the first aspect, for example, a processing unit.

The processing unit is configured to determine a first multiple subscriber identity module MUSIM gap. The processing unit is configured to: when the first MUSIM gap and a first time domain resource for carrying a channel or a signal overlap, determine, based on a first priority and a second priority, whether to deactivate the first MUSIM gap, where the first priority is a priority of the first MUSIM gap, and the second priority is a priority of a channel or a signal.

Specifically, the communication apparatus may include units and/or modules configured to perform the method provided in any one of the possible implementations of the first aspect, for example, a processing unit and an interface unit.

In an implementation, the interface unit may be a transceiver or an input/output interface, and the processing unit may be at least one processor. Optionally, the transceiver may be a transceiver circuit. Optionally, the input/output interface may be an input/output circuit.

In another implementation, the interface unit may be an input/output interface, an interface circuit, an output circuit, an input circuit, a pin, a related circuit, or the like on a chip, a chip system, or a circuit; and the processing unit may be at least one processor, a processing circuit, a logic circuit, or the like.

For beneficial effects of the apparatus shown in the sixth aspect and the possible designs of the sixth aspect, refer to the beneficial effects in the first aspect and the possible designs of the first aspect.

According to a seventh aspect, a communication apparatus is provided. The apparatus is configured to perform the method provided in any one of the possible implementations of the second aspect. Specifically, the apparatus may include units and/or modules configured to perform the method provided in any one of the possible implementations of the second aspect, for example, a processing unit.

The processing unit is configured to determine a second multiple subscriber identity module MUSIM gap. The processing unit is configured to: when the second MUSIM gap and a second time domain resource overlap, determine, based on a third priority and/or a fourth priority, whether to deactivate the second MUSIM gap, where a duration of the second time domain resource is a running duration of a first timer in discontinuous reception, the third priority is a priority of the second MUSIM gap, and the fourth priority is a priority of a channel or a signal that triggers or is associated with starting or restarting of the first timer.

Specifically, the communication apparatus may include units and/or modules configured to perform the method provided in any one of the possible implementations of the second aspect, for example, a processing unit and an interface unit.

In an implementation, the interface unit may be a transceiver or an input/output interface, and the processing unit may be at least one processor. Optionally, the transceiver may be a transceiver circuit. Optionally, the input/output interface may be an input/output circuit.

In another implementation, the interface unit may be an input/output interface, an interface circuit, an output circuit, an input circuit, a pin, a related circuit, or the like on a chip, a chip system, or a circuit; and the processing unit may be at least one processor, a processing circuit, a logic circuit, or the like.

For beneficial effects of the apparatus in the seventh aspect and the possible designs of the seventh aspect, refer to the beneficial effects in the second aspect and the possible designs of the second aspect.

According to an eighth aspect, a communication apparatus is provided. The apparatus includes: a memory, configured to store a program; and a processor, configured to execute a computer program or instructions stored in the memory. When the computer program or the instructions stored in the memory are executed, the processor is configured to perform the method provided in any one of the implementations of the first aspect or the fifth aspect.

In an implementation, the apparatus is a communication device (for example, a network device or a terminal device).

In another implementation, the apparatus is a chip, a chip system, or a circuit in a communication device.

According to a ninth aspect, this application provides a processor, configured to perform the method provided in any one of the implementations of the first aspect to the fifth aspect. In a process of performing these methods, a process of sending the foregoing information and a process of obtaining/receiving the foregoing information in the foregoing methods may be understood as a process of outputting the foregoing information by the processor and a process of receiving the foregoing input information by the processor. When outputting the foregoing information, the processor outputs the foregoing information to an interface, and transmits the information through the interface. After the foregoing information is output by the processor, other processing may further need to be performed on the information before the information arrives at the interface. Similarly, when the processor receives the foregoing input information, the interface obtains/receives the foregoing information, and inputs the foregoing information into the processor. Further, after the interface receives the foregoing information, other processing may need to be performed on the foregoing information before the foregoing information is input into the processor.

Unless otherwise specified, or if operations such as related transmitting, sending and obtaining/receiving do not conflict with actual functions or internal logic in related descriptions, the operations may be understood as operations such as outputting, receiving, and inputting, or may be understood as transmitting, sending and receiving operations performed by a radio frequency circuit and an antenna. This is not limited in this application.

In an implementation process, the processor may be a processor specially configured to perform these methods, or a processor, for example, a general-purpose processor, that executes a computer program or instructions in the memory to perform these methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in embodiments of this application.

According to a tenth aspect, a computer-readable storage medium is provided. The computer-readable storage medium stores program code to be executed by a device, and the program code includes the method provided in any one of the implementations of the first aspect to the fifth aspect.

According to an eleventh aspect, a computer program product including instructions is provided. When the computer program product runs on a computer, the computer is enabled to perform the method provided in any one of the implementations of the first aspect to the fifth aspect.

According to a twelfth aspect, a chip is provided. The chip includes a processor and a communication interface, and the processor reads, through the communication interface, instructions stored in a memory, to perform the method provided in any one of the implementations of the first aspect to the fifth aspect.

Optionally, in an implementation, the chip further includes the memory. The memory stores a computer program or instructions. The processor is configured to execute the computer program or the instructions stored in the memory. When the computer program or the instructions are executed, the processor is configured to perform the method provided in any one of the implementations of the first aspect to the fifth aspect.

**BRIEF DESCRIPTION OF DRAWINGS**

FIG. 1 is a diagram of a communication system 100 according to an embodiment of this application;
FIG. 2 is a diagram of a periodic MUSIM gap pattern according to an embodiment of this application;
FIG. 3 is a diagram of a periodic conflict between a time domain resource and an MUSIM gap according to an embodiment of this application;
FIG. 4 is a diagram of a communication method 400 according to an embodiment of this application;

FIG. 5 is an interaction diagram of another communication method 500 according to an embodiment of this application;

FIG. 6 is a diagram of a conflict between an MUSIM gap and a time domain resource of a DRX timer according to an embodiment of this application;

FIG. 7 is a diagram of another conflict between an MUSIM gap and a time domain resource of a DRX timer according to an embodiment of this application;

FIG. 8 is a diagram of still another conflict between an MUSIM gap and a time domain resource of a DRX timer according to an embodiment of this application;

FIG. 9 is a diagram of still another communication method 900 according to an embodiment of this application;

FIG. 10 is an interaction diagram of yet another communication method 1000 according to an embodiment of this application;

FIG. 11 is an interaction diagram of still yet another communication method 1100 according to an embodiment of this application;

FIG. 12 is a diagram of a communication apparatus 1200 according to an embodiment of this application;

FIG. 13 is a diagram of a structure of a communication apparatus 1300 according to an embodiment of this application;

FIG. 14 is a diagram of a chip system 1400 according to an embodiment of this application;

FIG. 15 is a schematic flowchart of a further communication method 1500 according to an embodiment of this application;

FIG. 16 is a schematic flowchart of a still further communication method 1600 according to an embodiment of this application; and

FIG. 17 is a diagram of MUSIM gap measurement according to an embodiment of this application.

## DESCRIPTION OF EMBODIMENTS

The following describes technical solutions of embodiments of this application with reference to the accompanying drawings.

The technical solutions in embodiments of this application may be applied to various communication systems, for example, a global system for mobile communications (Global System for Mobile communications, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communication system, a 5th generation (5th Generation, 5G) system, a new radio (New Radio, NR) system, or a future evolved network.

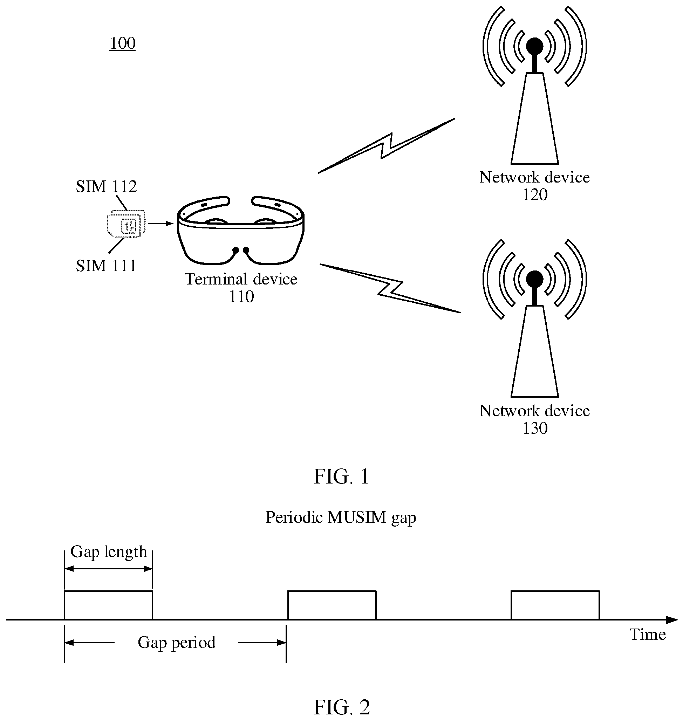

For ease of understanding of embodiments of this application, a communication system to which a method provided in embodiments of this application is applicable is first described in detail with reference to FIG. 1.

FIG. 1 is a diagram of a communication system 100 according to an embodiment of this application.

As shown in FIG. 1, the communication system 100 may include at least one terminal device, for example, a terminal device 110. The communication system may further include at least one network device, for example, a network device 120 and a network device 130. The terminal device 110 includes a plurality of SIMs, and the terminal device may register with a plurality of networks by using the plurality of SIMs, to adapt to different use scenarios. For example, as shown in FIG. 1, a SIM 111 may be configured to implement LTE network communication between the terminal device 110 and the network device 120, and a SIM 112 may be configured to implement 5G network communication between the terminal device 110 and the network device 130.

The network device may communicate with the terminal device through a radio link. For example, the network device 120 may send configuration information to the terminal device 110, and the terminal device 110 may send uplink data to the network device 120 based on the configuration information. For another example, the network device 120 may send downlink data to the terminal device 110.

A network device (for example, the network device 120 or the network device 130) in embodiments of this application may be a device configured to communicate with a terminal device (for example, the terminal device 110). The network device may be a base station (Base Transceiver Station, BTS) in a global system for mobile communications (Global System for Mobile communications, GSM) or a code division multiple access (Code Division Multiple Access, CDMA) system, a base station (NodeB, NB) in a wideband code division multiple access (Wideband Code Division Multiple Access, WCDMA) system, an evolved NodeB (Evolved NodeB, eNB or eNodeB) in an LTE system, or a radio controller in a cloud radio access network (Cloud Radio Access Network, CRAN) scenario. Alternatively, the network device may be a relay station, an access point, a vehicle-mounted device, a wearable device, a network device in a future 5G network, a network device in a future evolved PLMN network, or the like. This is not limited in embodiments of this application. All or a part of functions of the network device in this application may alternatively be implemented by using a software function running on hardware, or may be implemented by using an instantiated virtualization function on a platform (for example, a cloud platform).

It should be understood that the network device in the communication system may be any device having a wireless transceiver function. The network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband Unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like, or may be a gNB, a gNodeB, or a transmission point (TRP or TP) in a 5G system, for example, an NR system.

It should be further understood that the terminal device in the wireless communication system may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (Session Initiation Protocol, SIP) phone, a wireless local loop (Wireless Local Loop, WLL) station, personal digital processing (Personal Digital Assistant, PDA), a handheld device having a wireless communication function, a computing device, another processing device connected to a wireless modem, a vehicle-mounted device, a wearable device, a terminal device in a 5G network, a terminal device in a future evolved public land mobile communication network (Public Land Mobile Network, PLMN), or the like. This is not limited in embodiments of this application.

The terminal device in embodiments of this application may be a mobile phone (mobile phone), a tablet computer (pad), a computer having a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in embodiments of this application.

It should be further understood that FIG. 1 is only a simplified diagram of an example for ease of understanding. The communication system 100 may further include another network device or another terminal device, which is not shown in FIG. 1. For brevity, the following uses an "MUSIM device" to indicate a terminal device with an MUSIM.

Currently, the MUSIM device may receive paging messages from a plurality of networks. When the MUSIM device is in an RRC layer connected state in a network A, a network B pages the MUSIM device. Currently, before the MUSIM device is handed over from the network A to the network B, there are two handover manners.

In a first manner, after sending an RRC connection release message to a network device corresponding to the network A, the MUSIM device monitors a paging message sent by a network device corresponding to the network B, and accesses the network B.

In a second manner, the MUSIM device still keeps in an RRC connected state in the network A, temporarily performs cell identification and measurement on a serving cell corresponding to the network B in an MUSIM gap, and monitors a paging message sent by a network device corresponding to the network B. The MUSIM gap is configured by the network A for the MUSIM device.

For the second manner, the MUSIM gap may be a periodic gap or an aperiodic gap.

If the MUSIM gap is the periodic gap, the network A may configure the following parameters for the MUSIM device: for example, a gap length (musim-GapLength), a gap period (musim-GapRepititionPeriod), and a gap offset (musim-GapOffset). For example, the MUSIM gap is in a pattern 0 to a pattern 26.

If the MUSIM gap is the aperiodic gap, parameters configured by the network A for the MUSIM device do not include a gap period. For example, the MUSIM gap is in a pattern 27 and a pattern 28.

FIG. 2 is a diagram of a periodic MUSIM gap pattern according to an embodiment of this application.

As shown in FIG. 2, the gap length indicates a duration of the MUSIM gap, in other words, the MUSIM device may be temporarily handed over from the network A to the network B in time domain of the gap length. For example, the gap length is in a unit of milliseconds (ms), and the gap length may be 1.5 ms, 3 ms, 3.5 ms, 4 ms, 5.5 ms, 6 ms, 10 ms, or 20 ms.

For example, the gap period may represent a gap duration between MUSIM gaps. For example, the gap period is in a unit of milliseconds (ms), and the gap period may be 20 ms, 40 ms, 80 ms, 160 ms, 320 ms, 640 ms, 1280 ms, 2560 ms, or 5120 ms.

The gap offset is for determining a start position of the gap period.

For example, when the MUSIM gap is in the pattern 0, the gap length is 6 ms, and the gap period is 40 ms.

When the MUSIM device keeps in the RRC connection state in the network A, and service data transmission exists between the network device corresponding to the network A and the MUSIM device, a service data transmission rate is in a unit of frames per second (frames per second, FPS). If the service data transmission rate is N frames per second, a period in which a frame of the service data transmission arrives (referred to as a first period) is $\frac{1}{N}$ second. For example, first periods corresponding to service data of 30 FPS, 60 FPS, and 90 FPS are respectively 1/30s, 1/60s, and 1/90s. Although both the first period and the MUSIM gap period are configured by the network device corresponding to the network A for the MUSIM device, because the first period has a non-integer feature, the network device cannot avoid a conflict between the two periods in time domain.

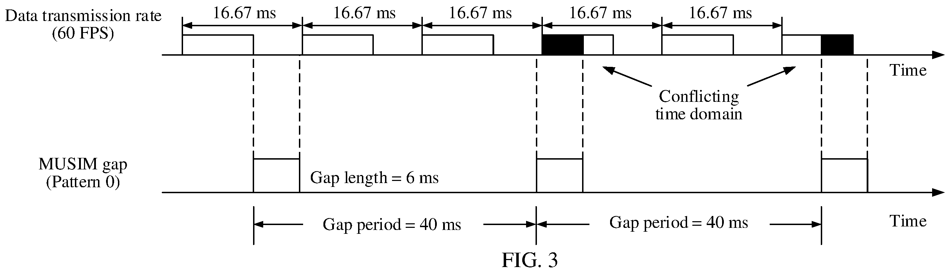

FIG. 3 is a diagram of a periodic conflict between a time domain resource and an MUSIM gap according to an embodiment of this application.

As shown in FIG. 3, an example in which the service data transmission rate is 60 FPS is used, and a periodic MUSIM gap is described by using the pattern 0 (where the gap period is 40 ms, and the gap length is 6 ms) as an example.

If the service data transmission rate is 60 FPS, a period duration of the first period is approximately equal to 16.67 ms. When the network device corresponding to the network A sends a service data transmission rate related configuration and an MUSIM gap related configuration to the MUSIM device, a 1st service data transmission duration and a 1st gap length may be controlled not to overlap in time domain. However, because the first period has the non-integer feature, as shown in FIG. 3, a 4th service data transmission duration and a 2nd gap length overlap in time domain, and a 6th service data transmission duration and a 3rd gap length overlap in time domain. Currently, for such a conflict, the MUSIM device preferentially ensures normal operation of the MUSIM gap at the expense of service data transmission performance.

This greatly affects performance of service data transmission, especially for a delay-sensitive service. In recent years, with continuous development of a 5th generation (5th generation, 5G) communication system, a data transmission delay is continuously reduced, and a transmission capacity is increasingly large. The 5G communication system gradually penetrates into some multimedia services with strong real-time performance and a requirement for a large data capacity, for example, video transmission, cloud gaming (cloud gaming, CG), and extended reality (extended reality, XR).

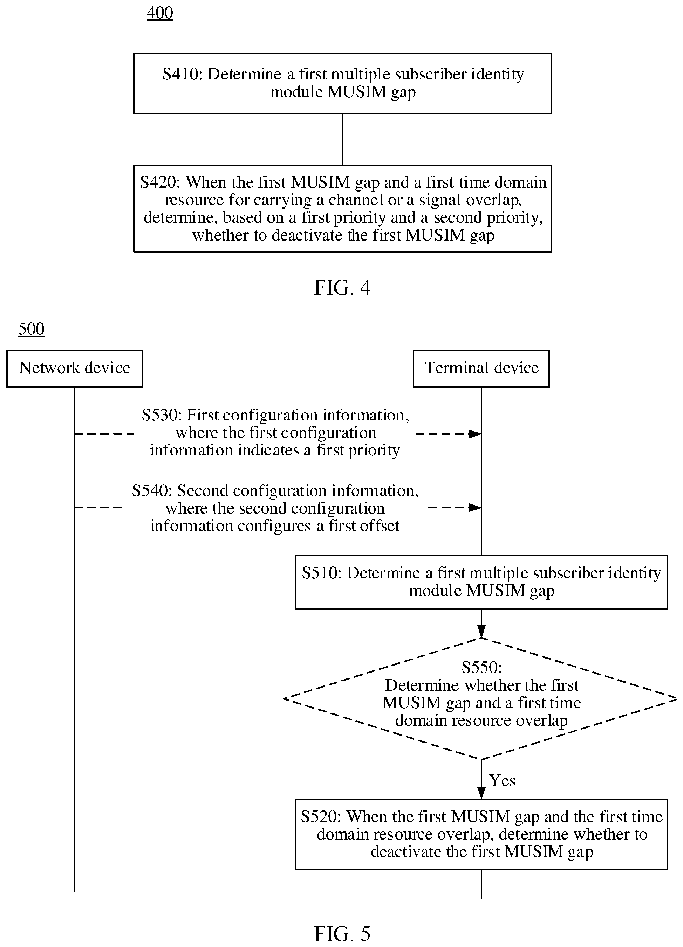

To resolve the foregoing technical problem, an embodiment of this application provides a communication method and apparatus. The following describes the communication method in detail with reference to FIG. 4 to FIG. 11.

For ease of understanding of embodiments of this application, the following descriptions are provided.

First, in this application, the term "indication" may include a direct indication and an indirect indication. When a piece of information is described to indicate A, the information may directly indicate A or indirectly indicate A, but it does not indicate that the information definitely carries A.

Information indicated by the information is referred to as to-be-indicated information. In a specific implementation process, the to-be-indicated information may be indicated in a plurality of manners, for example, but not limited to, a manner in which the to-be-indicated information, for example, the to-be-indicated information or an index of the to-be-indicated information may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated in an arrangement sequence of a plurality of pieces of information that is pre-agreed on (for example, stipulated in a protocol), to reduce indication overheads to some extent. In addition, a common part of all pieces of information may be identified and indicated in a unified manner, to reduce indication overheads caused by separately indicating same information.

Second, various numeric numbers such as "first" and "second" (for example, "#1" and "#2") shown in this application are merely for ease of description, and are used to distinguish between objects, but are not intended to limit the scope of embodiments of this application, for example, are used to distinguish between different data packets, but are not used to describe a particular order or sequence. It should be understood that the objects described in such a way are interchangeable in an appropriate circumstance, so that a solution other than the solutions in embodiments of this application can be described.

Third, in this application, the term "preconfiguration" may include "predefinition", for example, definition in a protocol. The "predefinition" may be implemented in a manner of prestoring corresponding code, a table, or other related information that may be used for indication in a device (for example, including network elements). A specific implementation thereof is not limited in this application.

Fourth, the term "storage" in embodiments of this application may be storage in one or more memories. The one or more memories may be separately disposed, or may be integrated into an encoder or a decoder, a processor, or a communication apparatus. Alternatively, a part of the one or more memories may be separately disposed, and a part of the one or more memories are integrated into the decoder, the processor, or the communication apparatus. A type of the memory may be a storage medium in any form. This is not limited in this application.

Fifth, the term "and/or" in this specification describes only an association relationship for describing associated objects, and indicates that three relationships may exist. For example, A and/or B may indicate the following three cases: Only A exists, both A and B exist, and only B exists. In addition, the character "/" in this specification usually indicates an "or" relationship between associated objects.

FIG. 4 is a diagram of a communication method 400 according to an embodiment of this application. It should be understood that the communication method 400 may be performed by a communication device (for example, a network device or a terminal device), or may be performed by a chip or a circuit of the communication device, or may be implemented by a logical module or software that can implement all or a part of functions of the communication device. This is not limited in this application.

S410: Determine a first multiple subscriber identity module MUSIM gap.

It should be understood that an MUSIM may also be referred to as a multiple universal subscriber identity module (multiple universal subscriber identity module). A Chinese name of the MUSIM is not limited in embodiments of this application.

The first MUSIM gap may be a periodic MUSIM gap, or may be an aperiodic MUSIM gap. This is not limited in embodiments of this application.

S420: When the first MUSIM gap and a first time domain resource for carrying a channel or a signal overlap, determine, based on a first priority and a second priority, whether to deactivate (deactivate) the first MUSIM gap, where the first priority is a priority of the first MUSIM gap, and the second priority is a priority of the channel or the signal.

In other words, if the first MUSIM gap and the first time domain resource for carrying the channel or the signal overlap, whether to deactivate the first MUSIM gap is determined based on the first priority and the second priority.

The foregoing description may also have another alternative description. It should be understood that resource overlapping is not a unique condition for determining, based on the first priority and the second priority, whether to deactivate the first MUSIM gap. That is, when the resource overlapping occurs, there may be an additional factor for determining, based on the first priority and the second priority, whether to deactivate the first MUSIM gap.

It should be understood that, that the first MUSIM gap and the first time domain resource overlap may be that the first MUSIM gap and the first time domain resource completely or partially overlap. For example, all time domain resources of the first MUSIM gap and the first time domain resource overlap, or a part of time domain resources on which the first MUSIM gap and all time domain resources of the first time domain resource overlap and the first time domain resource overlap. For another example, a part of time domain resources of the first MUSIM gap and a part of time domain resources of the first time domain resource overlap.

It should be understood that a unit of a time domain resource of an overlapping part between the first MUSIM gap and the first time domain resource may be a slot or a symbol.

Optionally, when the first priority is a low priority and the second priority is a high priority, the first MUSIM gap is deactivated.

That the terminal device deactivates the first MUSIM gap may be understood as that the terminal device deactivates all first MUSIM gaps. For example, if the first MUSIM gap is a periodic MUSIM gap, all MUSIM gap occasions (occasions) in a current period are deactivated.

That the terminal device deactivates the first MUSIM gap may also be understood as that the terminal device deactivates an overlapping part of the first MUSIM gap, and the terminal device still maintains cell identification, measurement, or paging monitoring for a network B in a non-overlapping part.

For example, when the first MUSIM gap is deactivated, transmission of a corresponding channel or signal is maintained on an overlapping part of the first time domain resource.

In the foregoing technical solution, when the MUSIM gap and the first time domain resource overlap, whether to deactivate the MUSIM gap is determined based on the priority of the MUSIM gap and the priority of the channel or the signal on the first time domain resource. In comparison with a case in which it is considered by default that the MUSIM gap is in an active state, this preferentially ensures that cell identification, measurement, and paging monitoring are performed on the network B in a time period corresponding to the MUSIM gap. The foregoing solution can reduce impact on service data transmission, to improve service performance, especially for a delay-sensitive service, for example, an XR service.

With reference to FIG. 5, without loss of generality, the following describes in detail the communication method provided in embodiments of this application by using interaction between devices as an example.

FIG. 5 is an interaction diagram of another communication method 500 according to an embodiment of this application. The communication method shown in FIG. 5 may be implemented mainly by a terminal device, or by a chip or a circuit of the terminal device, or the communication method 400 shown in FIG. 4 may be implemented by a logical module or software that can implement all or a part of functions of the terminal device. The communication method 500 includes the following steps.

In the interaction diagram of this application, an example in which a network device and a terminal device are used as execution bodies of the interaction diagram is used to illustrate the corresponding method. However, the execution bodies of the interaction diagram are not limited in this application. For example, the network device in FIG. 5 may alternatively be a chip, a chip system, or a processor that supports the network device in implementing the corresponding method, or may be a logical module or software that can implement all or a part of functions of the network device. The terminal device in FIG. 5 may alternatively be a chip, a chip system, or a processor that supports the terminal device in implementing the corresponding method, or may be a logical module or software that can implement all or a part of functions of the terminal device.

S510: The terminal device determines a first MUSIM gap.

Optionally, the terminal device determines a first time domain resource, where the first time domain resource is a time domain resource for carrying a channel or a signal.

In a possible implementation, the terminal device determines the first MUSIM gap by using a gap length, a gap period, and a gap offset of the first MUSIM gap.

It should be understood that, after the terminal device determines the first MUSIM gap, the terminal device considers by default that the first MUSIM gap is in an active state.

For example, the channel carried on the first time domain resource may be a first channel, for example, a physical uplink shared channel (physical uplink shared channel, PUSCH), a physical uplink control channel (physical uplink control channel, PUCCH), a physical downlink shared channel (physical downlink shared channel, PDSCH), or a physical downlink control channel (physical downlink control channel, PDCCH).

For example, the channel carried on the first time domain resource may alternatively be a second channel, for example, a logical channel carried in a media access control layer protocol data unit (media access control protocol data unit, MAC PDU) or a media access control layer control element (media access control control element, MAC CE).

For example, the signal carried on the first time domain resource may be a channel state information reference signal (channel state information reference signal, CSI-RS) or a synchronization signal block (synchronization signal block, SSB) for downlink channel measurement, or may be a sounding reference signal (Sounding reference signal, SRS) for uplink channel measurement.

S520: When the first MUSIM gap and the first time domain resource overlap, the terminal device determines whether to deactivate the first MUSIM gap.

It should be understood that, for related descriptions in which the first MUSIM gap and the first time domain resource overlap, refer to S420. Details are not described herein again.

In a possible implementation, the terminal device determines, based on a first priority and a second priority, whether to deactivate the first MUSIM gap.

It should be understood that the first priority is a priority of the first MUSIM gap, and the second priority is a priority of the channel or the signal carried on the first time domain resource.

In a possible implementation, for the first channel, the terminal device may determine the second priority based on a priority index (priority index) of the first channel.

For example, when a value of the priority index of the first channel is 1, a priority of the first channel is a high priority, that is, the second priority is a high priority; or when a value of the priority index of the first channel is 0, a priority of the first channel is a low priority, that is, the second priority is a low priority.

In a possible implementation, for the second channel, the terminal device may determine the second priority based on a highest priority of the second channel carried in the MAC PDU and an uplink priority threshold (ul-Prioritization Thres).

For example, when the highest priority of the second channel is greater than or equal to the uplink priority threshold, it is determined that a priority of the second channel is a high priority, that is, the second priority is a high priority; or when the highest priority of the second channel is less than the uplink priority threshold, it is determined that a priority of the second channel is a low priority, that is, the second priority is a low priority.

There are four cases shown in Table 1 for the first priority and the second priority.

Table 1

| | First priority | Second priority |
|---|---|---|
| Case 1 | High priority | High priority |
| Case 2 | High priority | Low priority |
| Case 3 | Low priority | High priority |
| Case 4 | Low priority | Low priority |

In a possible implementation, for the case 1, when the first priority is a high priority and the second priority is a high priority, the active state of the first MUSIM gap is maintained.

In other words, for the case 1, the active state of the first MUSIM gap is maintained, the terminal device performs cell identification, measurement, or paging monitoring on a cell of a network B in the first MUSIM gap, and channel or signal transmission is not performed on an overlapping part of the first time domain resource.

In a possible implementation, for the case 2, when the first priority is a high priority and the second priority is a low priority, the active state of the first MUSIM gap is maintained.

In a possible implementation, for the case 3, when the first priority is a low priority and the second priority is a high priority, the first MUSIM gap is deactivated.

In other words, for the case 3, the terminal device suspends performing cell identification, measurement, or paging monitoring on a cell of a network B in the first MUSIM gap, and channel or signal transmission is still performed on an overlapping part of the first time domain resource.

For example, for the case 3, when the first time domain resource carries the first channel, the terminal device suspends performing cell identification, measurement, or paging monitoring on the cell of the network B in the first MUSIM gap, and still receives or sends the PUSCH, the PUCCH, the PDSCH, or the PDCCH on the overlapping part of the first time domain resource.

For example, for the case 3, when the first time domain resource carries the second channel, the terminal device suspends performing cell identification, measurement, or paging monitoring on the cell of the network B in the first MUSIM gap, and still receives or sends the logical channel in the MAC PDU or the MAC CE on the overlapping part of the first time domain resource.

Optionally, the terminal device determines, at a first moment based on the first priority and the second priority, whether to deactivate the first MUSIM gap.

It should be understood that the first moment is before a start moment of the first MUSIM gap, and a time interval between the first moment and the start moment is greater than or equal to a first offset.

In this way, the terminal device performs a deactivation operation on the first MUSIM gap based on a priority determining result, or maintains the active state of the first MUSIM gap, so that service transmission performance can be effectively ensured. Especially for a delay-sensitive service, when a priority of a related channel or signal of the delay-sensitive service is a high priority, and the priority of the first MUSIM gap is a low priority, data transmission of the delay-sensitive service is maintained on a time domain overlapping part, so that transmission performance of the delay-sensitive service can be improved.

Optionally, before S510, in S530, the network device sends first configuration information to the terminal device, and the terminal device receives the first configuration information from the network device, where the first configuration information indicates the first priority.

Optionally, the terminal device determines the first priority based on the first configuration information.

Optionally, a first priority value and a first priority threshold of the first MUSIM gap may be configured based on the first configuration information; and the terminal device determines the first priority of the first MUSIM gap based on the first priority value and the first priority threshold.

For example, when the first priority value is greater than or equal to the first priority threshold, the first priority is a high priority; or when the first priority value is less than the first priority threshold, the first priority is a low priority.

It should be understood that the first priority value may be a value within a range. The foregoing manner of determining the first priority by directly comparing the first priority value with the first priority threshold is merely an example. Alternatively, the first priority may be determined by using a difference or a ratio between the first priority value and the first priority threshold. This is not limited in embodiments of this application.

Optionally, a second priority value of the first MUSIM gap may be configured based on the first configuration information; and the terminal device determines the first priority of the first MUSIM gap based on the second priority value.

In a possible implementation, when the second priority value is "Value1", the first priority is a high priority; or when the second priority value is "Value2", the first priority is a low priority. For example, if Value=1, the first priority is a high priority; or if Value=0, the first priority is a low priority.

It should be understood that the second priority value may have two fixed values, to represent that the first priority is a high priority or a low priority. A value representing the high priority or the low priority is not limited in embodiments of this application. The terminal device may preconfigure an index relationship between the second priority value and the high priority, and an index relationship between the second priority value and the low priority, so that the terminal device may determine the first priority based on the second priority value.

In a possible implementation, the network device may send the first configuration information to the terminal device by using RRC signaling.

The terminal device may further receive parameters such as the gap length, the gap period, and the gap offset of the first MUSIM gap by using the RRC signaling.

Optionally, in S540, the network device sends second configuration information to the terminal device, and the terminal device receives the second configuration information from the network device, where the second configuration information configures the first offset.

It should be understood that the first offset indicates a time domain position at which the terminal device determines whether to deactivate the first MUSIM gap. In other words, the first offset is a minimum offset time period of the first moment at which the terminal device determines whether to deactivate the first MUSIM gap before the start moment of the first MUSIM gap.

In a possible implementation, the first moment is determined based on the first offset and the start moment of the first MUSIM gap.

In a possible implementation, the network device may send the second configuration information to the terminal device by using the RRC signaling.

In this way, it can be ensured, by using the first offset, that the terminal device determines in time whether to deactivate the first MUSIM gap, to reduce impact of a processing delay on the terminal device caused by carrier frequency switching required by the terminal device to perform inter-frequency measurement.

Optionally, between S510 and S520, in S540, the terminal device determines whether the first MUSIM gap and the first time domain resource overlap.

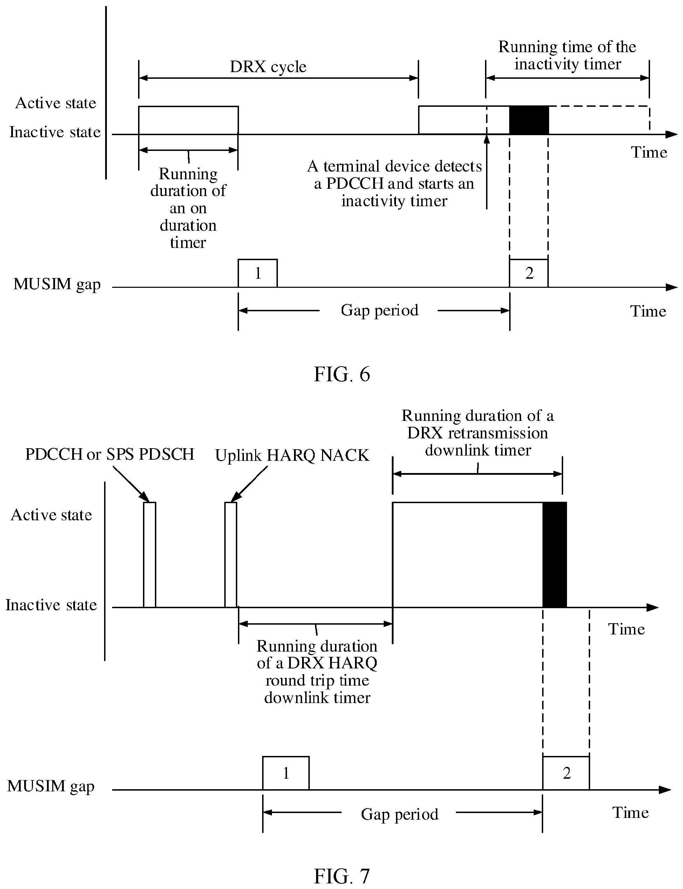

In a DRX scenario, the MUSIM gap and a time domain resource corresponding to a DRX timer may overlap. Specific scenarios are described in detail with reference to FIG. 6 to FIG. 8.

FIG. 6 is a diagram of a conflict between an MUSIM gap and a time domain resource of a DRX timer according to an embodiment of this application.

As shown in FIG. 6, when a terminal device is in an active state, the terminal device periodically monitors a PDCCH, and when the terminal device is in an inactive state, the terminal device does not monitor the PDCCH. The terminal device detects the PDCCH in a running duration of a DRX on duration timer (drx-onDurationTimer), and receives or sends data in a running duration of a DRX inactivity timer (drx-InactivityTimer) by starting or restarting the DRX inactivity timer. In the running duration of the DRX inactivity timer, the terminal device is in the active state, and still needs to continuously monitor the PDCCH.

A periodic MUSIM gap is used as an example. As shown in FIG. 6, a 2nd MUSIM gap and the running duration of the DRX inactivity timer overlap in time domain. An overlapping time domain resource shown in FIG. 6 indicates that an entire duration of the 2nd MUSIM gap and a part of the duration of the DRX inactivity timer overlap.

FIG. 7 is a diagram of another conflict between an MUSIM gap and a time domain resource of a DRX timer according to an embodiment of this application.

As shown in FIG. 7, a terminal device receives a PDCCH indicating downlink transmission, or receives a semi-persistent scheduling (semi-persistent scheduling, SPS) PDSCH. When the terminal device fails to receive data, after sending a DRX uplink hybrid automatic repeat request negative acknowledgement (hybrid automatic repeat request negative acknowledgement, HARQ NACK), the terminal device starts a DRX HARQ round trip time downlink timer (drx-HARQ-RRT-TimerDL). After the DRX retransmission round trip time downlink timer expires, the terminal device starts a DRX retransmission downlink timer (drx-RetransmissionTimerDL). In a running duration of the DRX retransmission downlink timer, the terminal device is in an active state, and receives retransmission of the PDCCH and the PDSCH.

The DRX HARQ round trip time downlink timer indicates a minimum duration in which the terminal device expects to receive indication information for HARQ retransmission. In other words, the terminal device does not expect to receive downlink retransmission indication information in a running duration of the DRX HARQ round trip time downlink timer. The DRX retransmission downlink timer indicates a maximum duration in which the terminal device receives the downlink retransmission indication information.

A periodic MUSIM gap is used as an example.

As shown in FIG. 7, a 2nd MUSIM gap and the running duration of the DRX retransmission downlink timer overlap in time domain. An overlapping time domain resource shown in FIG. 7 indicates that a part of a duration of the 2nd MUSIM gap and a part of the duration of the DRX retransmission downlink timer overlap.

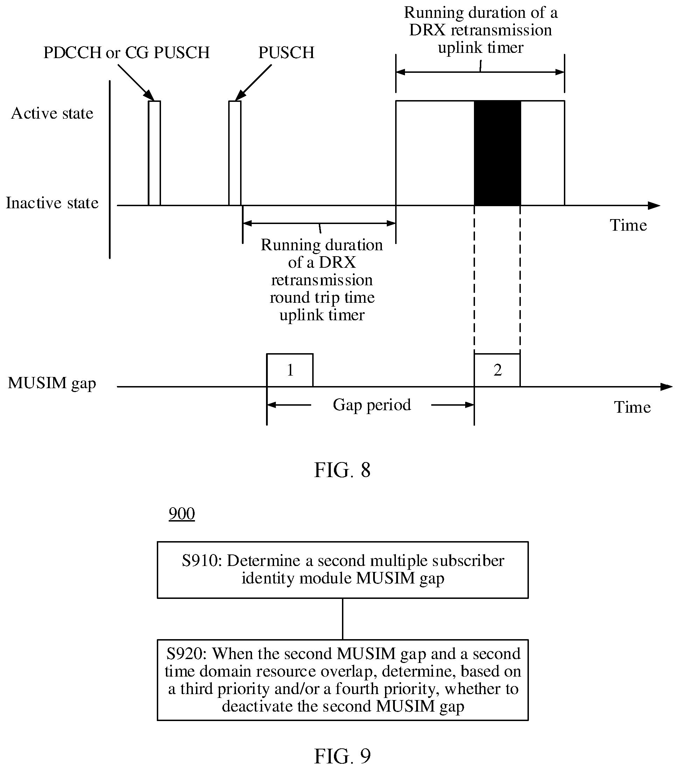

FIG. 8 is a diagram of still another conflict between an MUSIM gap and a time domain resource of a DRX timer according to an embodiment of this application.

As shown in FIG. 8, a terminal device receives a PDCCH indicating uplink transmission or a configured grant (configured grant, CG) PUSCH, and after completing uplink PUSCH transmission, the terminal device starts a DRX HARQ round trip time uplink timer (drx-HARQ-RRT-TimerUL). After the DRX HARQ round trip time uplink timer expires, the terminal device starts a DRX retransmission uplink timer (drx-RetransmissionTimerUL). In a running duration of the DRX retransmission uplink timer, the terminal device is in an active state, and receives a PDCCH to indicate PUSCH retransmission.

The DRX HARQ round trip time uplink timer indicates a minimum duration in which the terminal device expects to receive indication information for HARQ retransmission. In other words, the terminal device does not expect to receive uplink retransmission indication information in a running duration of the DRX HARQ round trip time uplink timer. The DRX retransmission uplink timer indicates a maximum duration in which the terminal device receives the uplink retransmission indication information.

A periodic MUSIM gap is used as an example. As shown in FIG. 8, a 2nd MUSIM gap and the running duration of the DRX retransmission uplink timer overlap in time domain. An overlapping time domain resource shown in FIG. 8 indicates that an entire duration of the 2nd MUSIM gap and a part of the duration of the DRX retransmission uplink timer overlap.

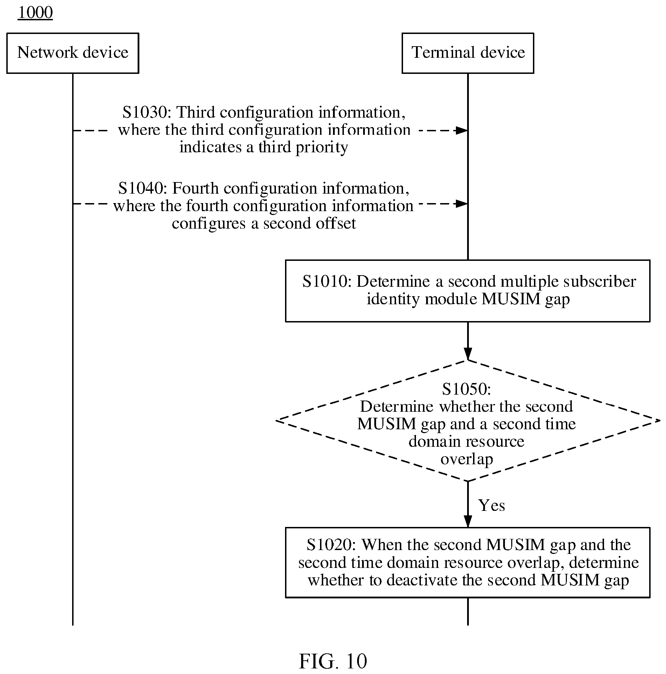

For the foregoing scenarios of the DRX timer, the following describes in detail the communication method provided in embodiments of this application with reference to FIG. 9 and FIG. 10.

FIG. 9 is a diagram of still another communication method 900 according to an embodiment of this application. It should be understood that the communication method 900 may be performed by a communication device (for example, a network device or a terminal device), or may be performed by a chip or a circuit of the communication device, or may be implemented by a logical module or software that can implement all or a part of functions of the communication device. This is not limited in this application.

S910: Determine a second multiple subscriber identity module MUSIM gap.

The second MUSIM gap may be a periodic MUSIM gap, or may be an aperiodic MUSIM gap. This is not limited in embodiments of this application.

S920: When the second MUSIM gap and a second time domain resource overlap, determine, based on a third priority and/or a fourth priority, whether to deactivate the second MUSIM gap, where a duration of the second time domain resource is a running duration of a first timer in discontinuous reception DRX, the third priority is a priority of the second MUSIM gap, and the fourth priority is a priority of a channel or a signal that triggers or is associated with starting or restarting of the first timer.

It should be understood that related descriptions of "when the second MUSIM gap and the second time domain resource overlap" are similar to those of "when the first MUSIM gap and the first time domain resource for carrying the channel or the signal overlap" in S420. For details, refer to S420. Details are not described herein again.

It should be understood that the channel or the signal that triggers the starting or the restarting of the first timer indicates that the starting or the restarting of the first timer is directly triggered by the channel or the signal. This is described in detail below with reference to FIG. 10.

It should be understood that, the signal or the signal that is associated with the starting or the restarting of the first timer indicates that the starting or the restarting of the first timer is indirectly triggered by the channel or the signal. This is described in detail below with reference to FIG. 10.

Optionally, when the third priority is a low priority and the fourth priority is a high priority, the second MUSIM gap is deactivated.

Optionally, when the third priority is a low priority, the second MUSIM gap is deactivated.

Optionally, when the fourth priority is a high priority, the second MUSIM gap is deactivated.

It should be understood that related descriptions of "the second MUSIM gap is deactivated" are similar to those of "the first MUSIM gap is deactivated" in S420. For details, refer to S420. Details are not described herein again.

In a possible implementation, the first timer may be any one of a DRX inactivity timer, a DRX retransmission downlink timer, or a DRX retransmission uplink timer.

In the foregoing technical solution, when the MUSIM gap and the second time domain resource overlap, whether to deactivate the MUSIM gap is determined based on the priority of the MUSIM gap and the priority of the channel or the signal that triggers or is associated with the starting or the restarting of the first timer. In comparison with a case in which it is considered by default that the MUSIM gap is in an active state, this preferentially ensures that cell identification, measurement, and paging monitoring are performed on a network B in a time period corresponding to the MUSIM gap. The foregoing solution can reduce impact on service data transmission, to improve service performance, especially for a delay-sensitive service, for example, an XR service.

With reference to FIG. 10, without loss of generality, the following describes in detail the communication method provided in embodiments of this application by using interaction between devices as an example.

FIG. 10 is an interaction diagram of yet another communication method 1000 according to an embodiment of this application. The communication method shown in FIG. 10 may be implemented mainly by a terminal device, or by a chip or a circuit of the terminal device, or the communication method 900 shown in FIG. 9 may be implemented by a logical module or software that can implement all or a part of functions of the terminal device. The communication method 1000 includes the following steps.

In the interaction diagram of this application, an example in which a network device and a terminal device are used as execution bodies of the interaction diagram is used to illustrate the corresponding method. However, the execution bodies of the interaction diagram are not limited in this application. For example, the network device in FIG. 10 may alternatively be a chip, a chip system, or a processor that supports the network device in implementing the corresponding method, or may be a logical module or software that can implement all or a part of functions of the network device. The terminal device in FIG. 10 may alternatively be a chip, a chip system, or a processor that supports the terminal device in implementing the corresponding method, or may be a logical module or software that can implement all or a part of functions of the terminal device.

S1010: The terminal device determines a second MUSIM gap.

Optionally, the terminal device determines a second time domain resource, where a duration of the second time domain resource is a running duration of a first timer in DRX.

In a possible implementation, the terminal device determines the second MUSIM gap by using a gap length, a gap period, and a gap offset of the second MUSIM gap.

It should be understood that, after the terminal device determines the second MUSIM gap, the terminal device considers by default that the second MUSIM gap is in an active state.

In a possible implementation, the first timer may be any one of a DRX inactivity timer, a DRX retransmission downlink timer, or a DRX retransmission uplink timer.

S1020: When the second MUSIM gap and the second time domain resource overlap, the terminal device determines whether to deactivate the second MUSIM gap.

It should be understood that, for related descriptions in which the second MUSIM gap and the second time domain resource overlap, refer to S920. Details are not described herein again. For an example scenario in which the second MUSIM gap and the second time domain resource overlap, refer to detailed descriptions in FIG. 6 to FIG. 8.

In a possible implementation, the terminal device determines, based on a third priority and/or a fourth priority, whether to deactivate the second MUSIM gap.

It should be understood that the third priority is a priority of the second MUSIM gap. The fourth priority is a priority of a channel or a signal that triggers starting or restarting of the first timer. Alternatively, the fourth priority is a priority of a channel or a signal that is associated with the first timer.

In a possible implementation, the fourth priority is determined based on a value of a priority index of a PDCCH that triggers starting or restarting of the DRX inactivity timer during running of a DRX on duration timer.

For example, when the priority index of the PDCCH that triggers the starting or the restarting of the DRX inactivity timer is 1, it is determined that the fourth priority is a high priority; or when the priority index of the PDCCH that is associated with the DRX inactivity timer is 0, it is determined that the fourth priority is a low priority.

In a possible implementation, the fourth priority is determined based on a value of a priority index of any one of a PDCCH or an SPS PDSCH that is associated with starting or restarting of the DRX retransmission downlink timer, or a PUSCH that carries an uplink HARQ NACK.

It should be understood that, as shown in FIG. 7, the DRX retransmission downlink timer is started after a DRX HARQ round trip time downlink timer expires, and the DRX HARQ round trip time downlink timer is triggered by using a PUSCH that is associated with a PDCCH or an SPS PDSCH and that carries an uplink HARQ NACK. Therefore, the fourth priority is related to a priority of any one of the PDCCH, the SPS PDSCH, or the PUSCH that carries the uplink HARQ NACK.

For example, when the value of the priority index of the PDCCH that is associated with the DRX retransmission downlink timer is 1, the fourth priority is a high priority; or when the value of the priority index of the PDCCH that is associated with the DRX retransmission downlink timer is 0, the fourth priority is a low priority.

It should be understood that a manner of determining the fourth priority based on the priority index of the SPS PDSCH or the PUSCH is similar to the foregoing manner. Details are not described herein again. It should be noted that the priority index value of the SPS PDSCH may be indicated by using a HARQ codebook identifier (harq-CodebookID) field.

In a possible implementation, the fourth priority is determined based on a value of a priority index of any one of a PDCCH, a CG PDSCH, or a PUSCH that is associated with starting or restarting of the DRX retransmission uplink timer.

It should be understood that a manner of determining the fourth priority by using the value of the priority index of the channel that is associated with the DRX retransmission uplink timer is similar to a manner of determining the fourth priority by using the value of the priority index of the channel that is associated with the DRX retransmission downlink timer. Details are not described herein again.

Optionally, the terminal device determines, at a second moment based on the third priority and the fourth priority, whether to deactivate the second MUSIM gap.

It should be understood that the second moment is before a start moment of the second MUSIM gap, and a time interval between the second moment and the start moment is greater than or equal to a second offset.

There are four cases shown in Table 2 for the third priority and the fourth priority.

Table 2

|  | Third priority | Fourth priority |
|---|---|---|
| Case 5 | High priority | High priority |
| Case 6 | High priority | Low priority |
| Case 7 | Low priority | High priority |
| Case 8 | Low priority | Low priority |

For specific implementations of the cases in Table 2 and the cases in Table 1, refer to related descriptions of the cases in Table 1. For brevity, details are not described herein again.

Optionally, when the third priority is a low priority, the terminal device deactivates the second MUSIM gap.

Optionally, when the fourth priority is a high priority, the terminal device deactivates the second MUSIM gap.

Optionally, when the second MUSIM gap and the second time domain resource overlap, the terminal device determines to deactivate the second MUSIM gap.

In this way, when the DRX timer and the MUSIM gap overlap in time domain, the terminal device performs a deactivation operation on the second MUSIM gap based on a priority determining result, or maintains the active state of the second MUSIM gap, so that service transmission performance can be effectively ensured. Especially for a delay-sensitive service transmitted in the timer, when a priority of a channel or a signal that triggers or that is associated with the timer is a high priority, and the priority of the second MUSIM gap is a low priority, data transmission of the DRX timer is maintained on a time domain overlapping part, so that transmission performance of the delay-sensitive service can be improved.

Optionally, before S1010, in S1030, the network device sends third configuration information to the terminal device, and the terminal device receives the third configuration information from the network device, where the third configuration information indicates the third priority.

Optionally, the terminal device determines the third priority based on the third configuration information.

Optionally, a third priority value and a second priority threshold of the second MUSIM gap may be configured based on the third configuration information; and the terminal device determines the third priority of the second MUSIM gap based on the third priority value and the second priority threshold.

It should be understood that related examples and descriptions of determining the third priority are similar to those of determining the first priority in S530. For details, refer to S530. Details are not described herein again.

Optionally, a fourth priority value of the second MUSIM gap may be configured based on the third configuration information; and the terminal device determines the third priority of the second MUSIM gap based on the fourth priority value.

It should be understood that related examples and descriptions of determining the third priority based on the fourth priority value are similar to those of determining the first priority based on the second priority value in S530. For details, refer to S530. Details are not described herein again.

In a possible implementation, the network device may send the third configuration information to the terminal device by using RRC signaling.

The terminal device may further receive parameters such as the gap length, the gap period, and the gap offset of the second MUSIM gap by using the RRC signaling.

Optionally, in S1040, the network device sends fourth configuration information to the terminal device, and the terminal device receives the fourth configuration information from the network device, where the fourth configuration information configures the second offset.

It should be understood that related descriptions of the second offset are similar to those of the "first offset" in S540. For details, refer to S540. Details are not described herein again.

In a possible implementation, the second moment is determined based on the second offset and the start moment of the second MUSIM gap.

In this way, it can be ensured, by using the second offset, that the terminal device determines in time whether to deactivate the second MUSIM gap, to reduce impact of a processing delay on the terminal device caused by carrier frequency switching required by the terminal device to perform inter-frequency measurement.

Optionally, between S1010 and S1020, in S1050, the terminal device determines whether the second MUSIM gap and the second time domain resource overlap.

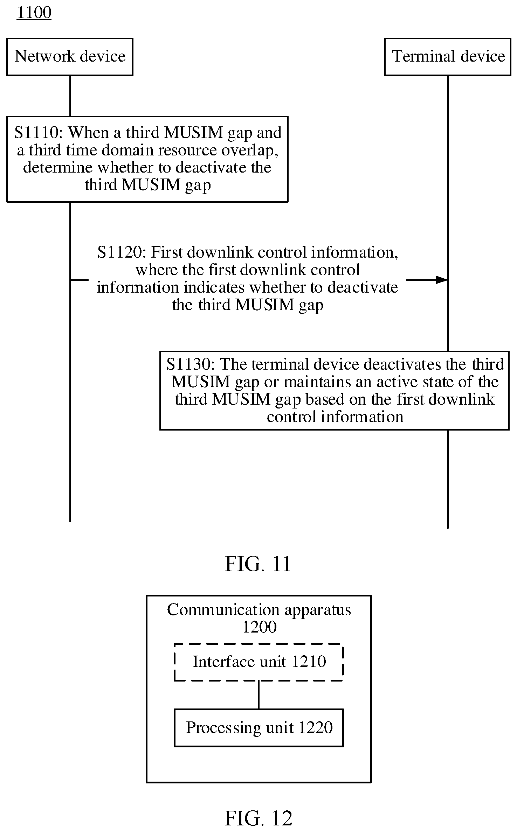

FIG. 11 is an interaction diagram of still yet another communication method 1100 according to an embodiment of this application.

S1110: When a third MUSIM gap and a third time domain resource overlap, a network device determines whether to deactivate the third MUSIM gap.

For example, the third time domain resource may be a time domain resource for transmitting a carried channel or signal between the network device and a terminal device. In this case, the third time domain resource may be equivalent to a first time domain resource. For a specific implementation in which the network device determines whether to deactivate the third MUSIM gap, refer to the communication method 400.

For another example, a duration of the third time domain resource may alternatively be a running duration of a DRX timer. In this case, the third time domain resource may be equivalent to a second time domain resource. For a specific implementation in which the network device determines whether to deactivate the third MUSIM gap, refer to the communication method 500.

It should be understood that there may be another manner in which the network device determines whether to deactivate the third MUSIM gap. This is not limited in embodiments of this application.

S1120: The network device sends first downlink control information to the terminal device, and the terminal device receives the first downlink control information from the network device, where the first downlink control information indicates whether to deactivate the third MUSIM gap.

In a possible implementation, the first downlink control information may be scheduling downlink control information (downlink control information, DCI).

For example, the scheduling DCI may be specifically a DCI format 0_0 (DCI format 0_0), a DCI format 0_1 (DCI format 0_1), a DCI format 0_2 (DCI format 0_2), a DCI format 1_1 (DCI format 1_1), or a DCI format 1_2 (DCI format 1_2).

Specifically, first indication information is added to the scheduling DCI. The first indication information indicates whether to deactivate the third MUSIM gap, or the first indication information indicates an occasion (occasion) of whether to deactivate one or more third MUSIM gaps, or the first indication information indicates an occasion of whether to deactivate one or more third MUSIM gaps in a first time period.

In a possible implementation, the first downlink control information may alternatively be non-scheduling DCI.

For example, the non-scheduling DCI may be specifically a DCI format 2_6 (DCI format 2_6).

Specifically, second indication information is added to the non-scheduling DCI. The second indication information indicates whether to deactivate the third MUSIM gap, or the second indication information indicates an occasion (occasion) of whether to deactivate one or more third MUSIM gaps, or the second indication information indicates an occasion of whether to deactivate one or more third MUSIM gaps in a first time period, or the second indication information indicates an occasion of whether to deactivate one or more third MUSIM gaps in an $(i+1)^{th}$ DRX cycle. The terminal device may obtain the second indication information in an $i^{th}$ DRX cycle.

In a possible implementation, the first downlink control information may alternatively be new DCI.

Specifically, the new DCI is scrambled by using a new radio network temporary identifier (radio network temporary identifier, RNTI). The new DCI includes third indication information. The third indication information indicates whether to deactivate the third MUSIM gap, or the third indication information indicates an occasion (occasion) of whether to deactivate one or more third MUSIM gaps, or the third indication information indicates an occasion of whether to deactivate one or more third MUSIM gaps in a first time period, or the third indication information indicates an occasion of whether to deactivate one or more third MUSIM gaps in an $(i+1)^{th}$ DRX cycle. The terminal device may obtain the third indication information in an $i^{th}$ DRX cycle.

In a possible implementation, at a third moment, the network device sends the first downlink control information to the terminal device, and the terminal device receives the first downlink control information from the network device.

It should be understood that the third moment is before a start moment of the third MUSIM gap, and a time interval between the third moment and the start moment is greater than or equal to a third offset. The third offset is determined by the network device.

S1130: The terminal device deactivates the third MUSIM gap or maintains an active state of the third MUSIM gap based on the first downlink control information.

It should be understood that, for related explanations of deactivating the third MUSIM gap, refer to S420. Details are not described herein again.

In the foregoing technical solution, when the MUSIM gap and the third time domain resource overlap, after determining whether to deactivate the third MUSIM gap, the network device dynamically indicates, by using the downlink control information, the terminal device whether to deactivate the third MUSIM gap, so that the terminal device can more flexibly choose to continue to perform service data transmission with a network A on an overlapping part of the time domain resource, or perform cell identification, measurement, or paging monitoring on a cell of a network B.

The foregoing describes in detail the communication methods provided in embodiments of this application with reference to FIG. 4 to FIG. 11. It may be understood that, to implement the foregoing functions, corresponding hardware structures and/or software modules for performing the functions are included.

A person skilled in the art may aware that, with reference to units and algorithm steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for the particular application, but it should not be considered that the implementation goes beyond the scope of this application.

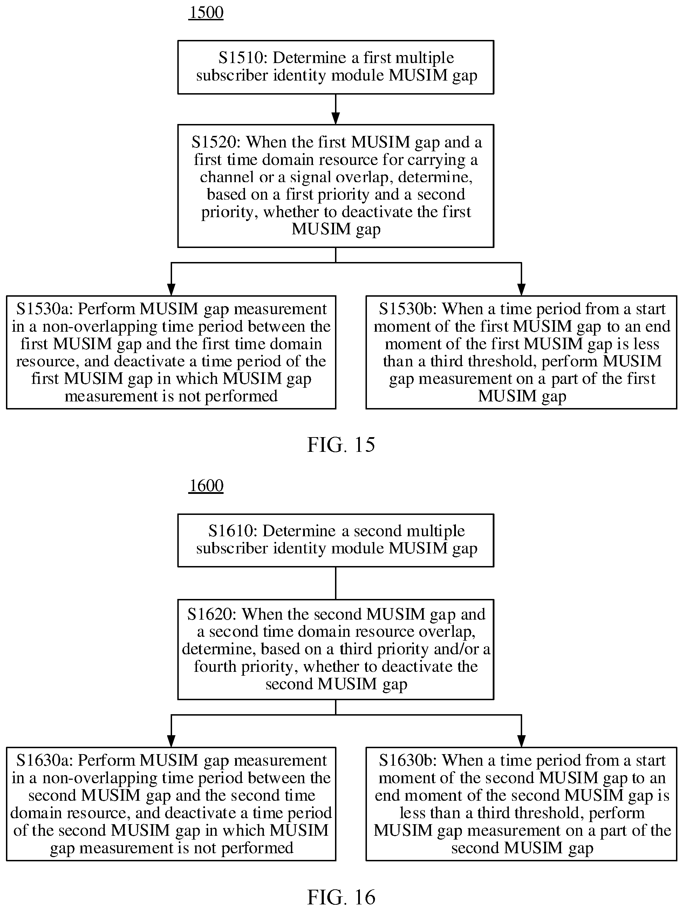

FIG. 15 is a schematic flowchart of a further communication method 1500 according to an embodiment of this application. It should be understood that the communication method 1500 may be performed by a communication device (for example, a network device or a terminal device), or may be performed by a chip or a circuit of the communication device, or may be implemented by a logical module or software that can implement all or a part of functions of the communication device. This is not limited in this application.

S1510: Determine a first multiple subscriber identity module MUSIM gap.

S1520: When the first MUSIM gap and a first time domain resource for carrying a channel or a signal overlap, determine, based on a first priority and a second priority, whether to deactivate the first MUSIM gap is determined.

It should be understood that S1510 and S1520 are similar to S410 and S420. Details are not described herein again.

S1530a: Perform MUSIM gap measurement in a non-overlapping time period between the first MUSIM gap and the first time domain resource, and deactivate a part of the first MUSIM gap.

It should be understood that deactivating the part of the first MUSIM gap may be deactivating a time period in which the first MUSIM gap and the first time domain resource overlap, or may be deactivating a time period in which MUSIM gap measurement is not performed.

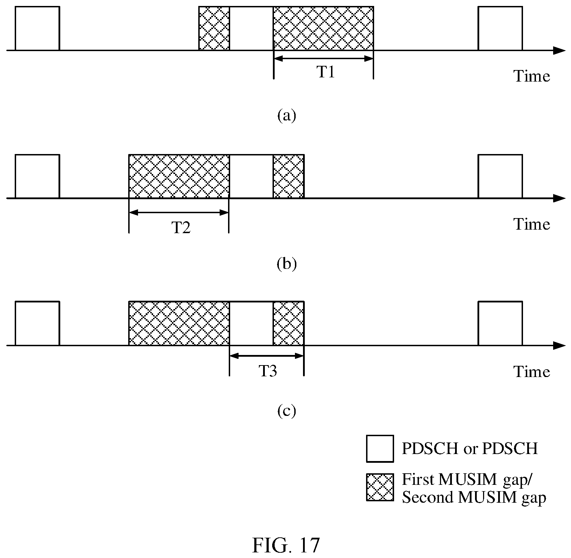

FIG. 17 is a diagram of MUSIM gap measurement according to an embodiment of this application.

In a possible implementation, when the non-overlapping time period is greater than a first threshold, MUSIM gap measurement is performed, where the non-overlapping time period includes a time period from a start moment of the first MUSIM gap to a start moment of the first time domain resource.

For example, as shown in (a) in FIG. 17, after data transmission is completed, if a non-overlapping time period T1 is greater than the first threshold, MUSIM gap measurement is performed. In this case, deactivating the part of the first MUSIM gap may be deactivating a time period from the start moment of the first MUSIM gap to an end moment of the first time domain resource.

In a possible implementation, when the non-overlapping time period is greater than a second threshold, MUSIM gap measurement is performed, where the non-overlapping time period includes a time period from the end moment of the first time domain resource to an end moment of the first MUSIM gap.

For example, as shown in (b) of FIG. 17, before data transmission, if a non-overlapping time period T2 is greater than the second threshold, MUSIM gap measurement is performed. In this case, deactivating the part of the first MUSIM gap may be deactivating a time period from the start moment of the first time domain resource to the end moment of the first MUSIM gap.

S1530b: When a time period from the start moment of the first MUSIM gap to the end moment of the first MUSIM gap is less than a third threshold, perform MUSIM gap measurement on a part of the first MUSIM gap.

The part of the first MUSIM gap may be the time period from the start moment of the first MUSIM gap to the end moment of the first MUSIM gap. Alternatively, the part of the first MUSIM gap may be an entire first MUSIM gap.

For example, as shown in (c) in FIG. 17, if a time period T3 from the start moment of the first MUSIM gap to the end moment of the first MUSIM gap is less than the third threshold, MUSIM measurement is performed in the time period T3.

It should be understood that any one of the first threshold, the second threshold, or the third threshold may be configured by the network device for the terminal device by using RRC signaling, and values of the first threshold, the second threshold, and the third threshold may be the same or may be different. This is not limited in embodiments of this application.

It should be further understood that, the time periods in S1530a and S1530b meet any one or more of the first threshold, the second threshold, or the third threshold, and MUSIM gap measurement may be performed in both the time periods that meet the condition.

FIG. 16 is a schematic flowchart of a still further communication method 1600 according to an embodiment of this application. It should be understood that the communication method 1600 may be performed by a communication device (for example, a network device or a terminal device), or may be performed by a chip or a circuit of the communication device, or may be implemented by a logical module or software that can implement all or a part of functions of the communication device. This is not limited in this application.

S1610: Determine a second multiple subscriber identity module MUSIM gap.

S1620: When the second MUSIM gap and a second time domain resource overlap, determine, based on a third priority and/or a fourth priority, whether to deactivate the second MUSIM gap, where a duration of the second time domain resource is a running duration of a first timer in discontinuous reception DRX, the third priority is a priority of the second MUSIM gap, and the fourth priority is a priority of a channel or a signal that triggers or is associated with starting or restarting of the first timer.

It should be understood that S1610 and S1620 are similar to S910 and S920. Details are not described herein again.

S1630a: Perform MUSIM gap measurement in a non-overlapping time period between the second MUSIM gap and the second time domain resource, and deactivate a time period of the second MUSIM gap in which MUSIM gap measurement is not performed.

S1630b: When a time period from a start moment of the second MUSIM gap to an end moment of the second MUSIM gap is less than a third threshold, perform MUSIM gap measurement on a part of the second MUSIM gap.

It should be understood that S1630a is similar to S1530a, and S1630b is similar to S1530b. Details are not described herein again.

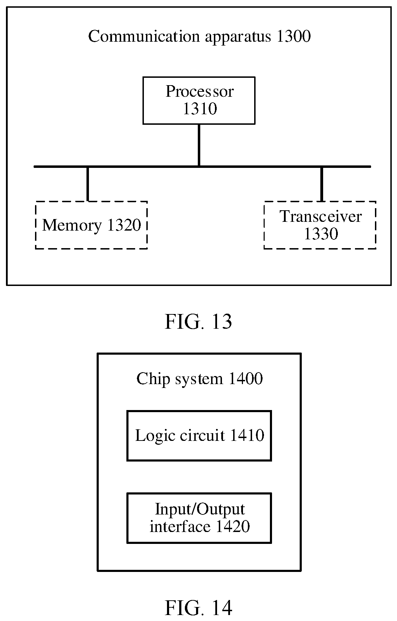

The following describes in detail communication apparatuses provided in embodiments of this application with reference to FIG. 12 and FIG. 14. It should be understood that descriptions of apparatus embodiments correspond to the descriptions of the method embodiments. Therefore, for content that is not described in detail, refer to the method embodiments above. For brevity, details of a part of content are not described herein again.

FIG. 12 is a diagram of a communication apparatus 1200 according to an embodiment of this application. The apparatus 1200 may include a processing unit 1220, and the processing unit 1220 may be configured to process data.

Optionally, the apparatus 1200 may further include an interface unit 1210. The interface unit 1210 may implement a corresponding communication function. The interface unit 1210 may also be referred to as a communication interface, a communication unit, or a transceiver unit. It should be understood that unless otherwise specified, or if operations such as sending and receiving in this application do not contradict an actual function or internal logic of the operations in related descriptions, the operations may be more generally understood as operations such as outputting and inputting, instead of operations of sending and receiving directly performed by a radio frequency circuit and an antenna.

Optionally, the apparatus 1200 may further include a storage unit. The storage unit may be configured to store instructions and/or data. The processing unit 1220 may read the instructions and/or the data in the storage unit, to enable the apparatus to implement the foregoing method embodiments.

The apparatus 1200 may be configured to perform an action performed by the communication device (for example, a network device or a terminal device) in the foregoing method embodiments. In this case, the apparatus 1200 may be a communication device or a component that can be configured in the communication device. The interface unit 1210 is configured to perform sending/receiving-related operations on a communication device side in the foregoing method embodiments, and the processing unit 1220 is configured to perform processing-related operations on the communication device side in the foregoing method embodiments.

In a design, the apparatus 1200 is configured to perform an action performed by the network device or the terminal device in the method embodiment shown in FIG. 4.

Specifically, the processing unit 1220 is configured to determine a first multiple subscriber identity module MUSIM gap. The processing unit 1220 is configured to: when the first MUSIM gap and a first time domain resource for carrying a channel or a signal overlap, determine, based on a first priority and a second priority, whether to deactivate the first MUSIM gap, where the first priority is a priority of the first MUSIM gap, and the second priority is a priority of a channel or a signal.

Optionally, the processing unit 1220 is configured to deactivate the first MUSIM gap when the first priority is a low priority and the second priority is a high priority.

Optionally, the apparatus 1200 further includes an interface unit 1210, and the interface unit 1210 is configured to receive first configuration information. The processing unit 1220 is further configured to determine the first priority based on the first configuration information.

Optionally, that the processing unit 1220 is further configured to determine the first priority based on the first configuration information includes: A first priority value and a first priority threshold of the first MUSIM gap are configured based on the first configuration information. The processing unit is configured to determine the first priority based on the first priority value and the first priority threshold.

Optionally, that the processing unit 1220 is further configured to determine the first priority based on the first configuration information includes: configuring a second priority value of the first MUSIM gap based on the first configuration information. The processing unit 1220 is configured to determine the first priority based on the second priority value.

Optionally, the interface unit 1210 is further configured to receive second configuration information, where the second configuration information configures a first offset. That the processing unit 1220 is configured to determine whether to deactivate the first MUSIM gap includes: The processing unit 1220 is configured to determine, at a first moment, whether to deactivate the first MUSIM gap, where the first moment is before a start moment of the first MUSIM gap, and a time interval between the first moment and the start moment is greater than or equal to the first offset.

In a design, the apparatus 1200 is configured to perform an action performed by the network device or the terminal device in the method embodiment shown in FIG. 15.

Optionally, that the processing unit 1220 is configured to determine whether to deactivate the first MUSIM gap includes: performing MUSIM gap measurement in a non-overlapping time period between the first MUSIM gap and the first time domain resource, and deactivating a part of the first MUSIM gap.

Optionally, that the processing unit 1220 is configured to perform MUSIM gap measurement includes: when the non-overlapping time period is greater than a first threshold, performing MUSIM gap measurement, where the non-overlapping time period includes a time period from the start moment of the first MUSIM gap to a start moment of the first time domain resource.

Optionally, that the processing unit 1220 is configured to perform MUSIM gap measurement includes: when the non-overlapping time period is greater than a second threshold, performing MUSIM gap measurement, where the non-overlapping time period includes a time period from an end moment of the first time domain resource to an end moment of the first MUSIM gap.

Optionally, that the processing unit 1220 is configured to determine whether to deactivate the first MUSIM gap includes: when a time period from a start moment of the first time domain resource to an end moment of the first MUSIM gap is less than a third threshold, performing MUSIM gap measurement on a part of the first MUSIM gap.

In a design, the apparatus 1200 is configured to perform an action performed by the network device or the terminal device in the method embodiment shown in FIG. 9.

Specifically, the processing unit 1220 is configured to determine a second multiple subscriber identity module MUSIM gap. The processing unit 1220 is configured to: when the second MUSIM gap and a second time domain resource overlap, determine, based on a third priority and/or a fourth priority, whether to deactivate the second MUSIM gap, where a duration of the second time domain resource is a running duration of a first timer in discontinuous reception, the third priority is a priority of the second MUSIM gap, and the fourth priority is a priority of a channel or a signal that triggers or is associated with starting or restarting of the first timer.

Optionally, that the processing unit 1220 is configured to determine, based on a third priority and/or a fourth priority, whether to deactivate the second MUSIM gap includes: when the third priority is a low priority and the fourth priority is a high priority, deactivating the second MUSIM gap.

Optionally, that the processing unit 1220 is configured to determine, based on a third priority and/or a fourth priority, whether to deactivate the second MUSIM gap includes: deactivating the second MUSIM gap when the third priority is a low priority.

Optionally, that the processing unit 1220 is configured to determine, based on a third priority and/or a fourth priority, whether to deactivate the second MUSIM gap includes: deactivating the second MUSIM gap when the fourth priority is a high priority.

Optionally, the apparatus 1200 further includes an interface unit 1210, and the interface unit 1210 is configured to receive third configuration information. The processing unit 1220 is further configured to determine the third priority based on the third configuration information.

Optionally, that the processing unit 1220 is further configured to determine the third priority based on the third configuration information includes: A third priority value and a second priority threshold of the second MUSIM gap are configured based on the third configuration information. The processing unit 1220 is further configured to determine the third priority based on the third priority value and the second priority threshold.

Optionally, that the processing unit 1220 is further configured to determine the third priority based on the third configuration information includes: configuring a fourth priority value of the second MUSIM gap based on the third configuration information. The processing unit 1220 is further configured to determine the third priority based on the fourth priority value.

Optionally, the interface unit 1210 is further configured to receive fourth configuration information, where the fourth configuration information configures a second offset. The processing unit 1220 is further configured to determine, at a second moment, whether to deactivate the second MUSIM gap, where the second moment is before a start moment of the second MUSIM gap, and a time interval between the second moment and the start moment is greater than or equal to the second offset.

In a design, the apparatus 1200 is configured to perform an action performed by the network device or the terminal device in the method embodiment shown in FIG. 16.

Optionally, that the processing unit 1220 is configured to determine whether to deactivate a second MUSIM gap includes: performing MUSIM gap measurement in a non-overlapping time period between the second MUSIM gap and a first time domain resource, and deactivating a part of the second MUSIM gap.

Optionally, that the processing unit 1220 is configured to perform MUSIM gap measurement includes: when the non-overlapping time period is greater than a first threshold, performing MUSIM gap measurement, where the non-overlapping time period includes a time period from a start moment of the second MUSIM gap to a start moment of a second time domain resource.

Optionally, that the processing unit 1220 is configured to perform MUSIM gap measurement includes: when the non-overlapping time period is greater than a second threshold, performing MUSIM gap measurement, where the non-overlapping time period includes a time period from an end moment of the second time domain resource to an end moment of the second MUSIM gap.

Optionally, that the processing unit 1220 is configured to determine whether to deactivate a second MUSIM gap includes: when a time period from a start moment of a second time domain resource to an end moment of the second MUSIM gap is less than a third threshold, performing MUSIM gap measurement on a part of the second MUSIM gap.

The apparatus 1200 may implement steps or procedures performed by the terminal device or the network device in the method embodiments according to embodiments of this application. The apparatus 1200 may include units configured to perform the methods performed by the terminal device or the network device in FIG. 5, FIG. 10, and FIG. 11. In addition, the units in the apparatus 1200 and the foregoing other operations and/or functions are respectively used to implement corresponding procedures of the network device in the method embodiments in FIG. 5, FIG. 10, and FIG. 11.

When the apparatus 1200 is configured to perform the method 500 in FIG. 5, the interface unit 1210 may be configured to perform S530 and S540 in the method 500, and the processing unit 1220 may be configured to perform processing steps in the method 500, for example, S510, S520, and S550.

When the apparatus 1200 is configured to perform the method 1000 in FIG. 10, the interface unit 1210 may be configured to perform S1030 and S1040 in the method 500, and the processing unit 1220 may be configured to perform processing steps in the method 1000, for example, S1010, S1020, and S1050.

When the apparatus 1200 is configured to perform the method 1100 in FIG. 11, the interface unit 1210 may be configured to perform S1120 in the method 500, and the processing unit 1220 may be configured to perform processing steps in the method 1100, for example, S1110 and S1130.

It should be understood that a specific process in which the units perform the foregoing corresponding steps is described in detail in the foregoing method embodiments. For brevity, details are not described herein.

The processing unit 1220 in the foregoing embodiments may be implemented by at least one processor or a processor-related circuit. The interface unit 1210 may be implemented by a transceiver or a transceiver-related circuit. The storage unit may be implemented by at least one memory.

FIG. 13 is a diagram of a structure of a communication apparatus 1300 according to an embodiment of this application.

As shown in FIG. 13, an embodiment of this application further provides a communication apparatus 1300. The apparatus 1300 includes a processor 1310. The processor 1310 is coupled to a memory 1320, the memory 1320 is configured to store a computer program or instructions and/or data, and the processor 1310 is configured to execute the computer program or the instructions and/or the data stored in the memory 1320, so that the methods in the foregoing method embodiments are performed.

Optionally, the apparatus 1300 includes one or more processors 1310.

Optionally, as shown in FIG. 13, the apparatus 1300 may further include the memory 1320.

Optionally, the apparatus 1300 may include one or more memories 1320.

Optionally, the memory 1320 and the processor 1310 may be integrated, or disposed separately.

Optionally, as shown in FIG. 13, the apparatus 1300 may further include a transceiver 1330. The transceiver 1330 is configured to receive and/or send a signal. For example, the processor 1310 is configured to control the transceiver 1330 to receive and/or send a signal.

In a solution, the apparatus 1300 is configured to implement operations performed by the communication device (for example, the network device or the terminal device) in the foregoing method embodiments.

For example, the processor 1310 is configured to implement processing-related operations performed by the network device or the terminal device in the foregoing method embodiments, and the transceiver 1330 is configured to implement transceiver-related operations performed by the network device or the terminal device in the foregoing method embodiments.

FIG. 14 is a diagram of a chip system 1400 according to an embodiment of this application. The chip system 1400 (or may be referred to as a processing system) includes a logic circuit 1410 and an input/output interface (input/output interface) 1420. The logic circuit is configured to be coupled to the input interface, and transmit a data parameter through the input/output interface, to perform the methods in the foregoing method embodiments. A device in which the chip system 1400 is installed may implement the methods and functions in embodiments of this application. For example, the logic circuit 1410 may be a processing circuit in the chip system 1400, to control the device in which the chip system 1400 is installed, or may be coupled to a storage unit, and invoke instructions in the storage unit, so that the device can implement the methods and functions in embodiments of this application. The input/output interface 1420 may be an input/output circuit in the chip system 1400, to output information processed by the chip system 1400, or input to-be-processed data or signaling information to the chip system 1400 for processing.

In a solution, the chip system 1400 is configured to implement operations performed by the communication device (for example, the network device or the terminal device) in the foregoing method embodiments.

For example, the logic circuit 1410 is configured to implement processing-related operations performed by the network device or the terminal device in the foregoing method embodiments, and the input/output interface 1420 is configured to implement transceiver-related operations performed by the network device or the terminal device in the foregoing method embodiments.

An embodiment of this application further provides a computer-readable storage medium. The computer-readable storage medium stores computer instructions for implementing the method performed by the communication device (for example, the network device

or the terminal device) in the foregoing method embodiments.

For example, when a computer program is executed by a computer, the computer is enabled to implement the method performed by the first communication device in the foregoing method embodiments.

An embodiment of this application further provides a computer program product including instructions. When the instructions are executed by a computer, the computer is enabled to implement the method performed by the communication device (for example, the network device, or the terminal device) in the foregoing method embodiments.

For explanations and beneficial effects of related content in any one of the apparatuses provided above, refer to the corresponding method embodiment provided above. Details are not described herein again.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should be further noted that the memory described in this specification is intended to include, but is not limited to, these memories and any other memory of a suitable type.

A person of ordinary skill in the art may be aware that, in combination with the examples described in embodiments disclosed in this specification, units and methods may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the protection scope of this application.

In several embodiments provided in this application, it should be understood that the disclosed apparatus and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. A part or all of the units may be selected based on actual requirements to implement the solutions provided in this application.

In addition, functional units in embodiments of this application may be integrated into one unit, each of the units may exist alone physically, or two or more units may be integrated into one unit.

All or a part of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. For example, the foregoing usable media may include but are not limited to: any medium that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, wherein the method comprises:

    determining a first multiple subscriber identity module MUSIM gap; and
    when the first MUSIM gap and a first time domain resource for carrying a channel or a signal overlap, determining, based on a first priority and a second priority, whether to deactivate the first MUSIM gap, wherein the first priority is a priority of the first MUSIM gap, and the second priority is a priority of the channel or the signal.

2. The method according to claim 1, wherein the determining, based on a first priority and a second priority, whether to deactivate the first MUSIM gap comprises:
    when the first priority is a low priority and the second priority is a high priority, deactivating the first MUSIM gap.

3. The method according to claim 1 or 2, wherein the method further comprises:

   receiving first configuration information; and
   determining the first priority based on the first configuration information.

4. The method according to claim 3, wherein the determining the first priority based on the first configuration information comprises:

   the first configuration information is used for configuring a first priority value and a first priority threshold of the first MUSIM gap; and
   determining the first priority based on the first priority value and the first priority threshold.

5. The method according to claim 3, wherein the determining the first priority based on the first configuration information comprises:

   the first configuration information is used for configuring a second priority value of the first MUSIM gap; and
   determining the first priority based on the second priority value.

6. The method according to any one of claims 1 to 5, wherein the method further comprises:

   receiving second configuration information, wherein the second configuration information configures a first offset; and
   the determining whether to deactivate the first MUSIM gap comprises:
   determining, at a first moment, whether to deactivate the first MUSIM gap, wherein the first moment is before a start moment of the first MUSIM gap, and a time interval between the first moment and the start moment is greater than or equal to the first offset.

7. The method according to any one of claims 1 to 6, wherein the determining whether to deactivate the first MUSIM gap comprises:
   performing MUSIM gap measurement in a non-overlapping time period between the first MUSIM gap and the first time domain resource, and deactivating a part of the first MUSIM gap.

8. The method according to claim 7, wherein the performing MUSIM gap measurement comprises:
   when the non-overlapping time period is greater than a first threshold, performing MUSIM gap measurement, wherein the non-overlapping time period comprises a time period from the start moment of the first MUSIM gap to a start moment of the first time domain resource.

9. The method according to claim 7, wherein the performing MUSIM gap measurement comprises:
   when the non-overlapping time period is greater than a second threshold, performing MUSIM gap measurement, wherein the non-overlapping time period comprises a time period from an end moment of the first time domain resource to an end moment of the first MUSIM gap.

10. The method according to claim 1 or 6, wherein the determining whether to deactivate the first MUSIM gap comprises:
    when a time period from a start moment of the first time domain resource to an end moment of the first MUSIM gap is less than a third threshold, performing MUSIM gap measurement on a part of the first MUSIM gap.

11. A communication method, wherein the method comprises:

    determining a second multiple subscriber identity module MUSIM gap; and
    when the second MUSIM gap and a second time domain resource overlap, determining, based on a third priority and/or a fourth priority, whether to deactivate the second MUSIM gap, wherein a duration of the second time domain resource is a running duration of a first timer in discontinuous reception DRX, the third priority is a priority of the second MUSIM gap, and the fourth priority is a priority of a channel or a signal that triggers or is associated with starting or restarting of the first timer.

12. The method according to claim 11, wherein the determining, based on a third priority and/or a fourth priority, whether to deactivate the second MUSIM gap comprises:
    when the third priority is a low priority and the fourth priority is a high priority, deactivating the second MUSIM gap.

13. The method according to claim 11, wherein the determining, based on a third priority and/or a fourth priority, whether to deactivate the second MUSIM gap comprises:
    when the third priority is a low priority, deactivating the second MUSIM gap.

14. The method according to claim 11, wherein the determining, based on a third priority and/or a fourth priority, whether to deactivate the second MUSIM gap comprises:
    when the fourth priority is a high priority, deactivating the second MUSIM gap.

15. The method according to any one of claims 11 to 14, wherein the method further comprises:

receiving third configuration information; and determining the third priority based on the third configuration information.

16. The method according to claim 15, wherein the determining the third priority based on the third configuration information comprises:

configuring a third priority value and a second priority threshold of the second MUSIM gap based on the third configuration information; and determining the third priority based on the third priority value and the second priority threshold.

17. The method according to claim 15, wherein the determining the third priority based on the third configuration information comprises:

configuring a fourth priority value of the second MUSIM gap based on the third configuration information; and determining the third priority based on the fourth priority value.

18. The method according to any one of claims 11 to 17, wherein the method further comprises:

receiving fourth configuration information, wherein the fourth configuration information configures a second offset; and the determining whether to deactivate the second MUSIM gap comprises: determining, at a second moment, whether to deactivate the second MUSIM gap, wherein the second moment is before a start moment of the second MUSIM gap, and a time interval between the second moment and the start moment is greater than or equal to the second offset.

19. The method according to any one of claims 11 to 18, wherein the determining whether to deactivate the second MUSIM gap comprises: performing MUSIM gap measurement in a non-overlapping time period between the second MUSIM gap and the second time domain resource, and deactivating a part of the second MUSIM gap.

20. The method according to claim 19, wherein the performing MUSIM gap measurement comprises: when the non-overlapping time period is greater than a first threshold, performing MUSIM gap measurement, wherein the non-overlapping time period comprises a time period from the start moment of the second MUSIM gap to a start moment of the second time domain resource.

21. The method according to claim 19, wherein the performing MUSIM gap measurement comprises: when the non-overlapping time period is greater than a second threshold, performing MUSIM gap measurement, wherein the non-overlapping time period comprises a time period from an end moment of the second time domain resource to an end moment of the second MUSIM gap.

22. The method according to claim 11 or 18, wherein the determining whether to deactivate the first MUSIM gap comprises: when a time period from a start moment of the second time domain resource to an end moment of the second MUSIM gap is less than a third threshold, performing MUSIM gap measurement on a part of the second MUSIM gap.

23. A communication apparatus, wherein the apparatus comprises a processing unit, wherein

the processing unit is configured to determine a first multiple subscriber identity module MUSIM gap; and the processing unit is configured to: when the first MUSIM gap and a first time domain resource for carrying a channel or a signal overlap, determine, based on a first priority and a second priority, whether to deactivate the first MUSIM gap, wherein the first priority is a priority of the first MUSIM gap, and the second priority is a priority of the channel or the signal.

24. The apparatus according to claim 23, wherein that the processing unit is configured to determine, based on a first priority and a second priority, whether to deactivate the first MUSIM gap comprises: the processing unit is configured to: when the first priority is a low priority and the second priority is a high priority, deactivate the first MUSIM gap.

25. The apparatus according to claim 23 or 24, wherein the apparatus further comprises an interface unit, wherein

the interface unit is configured to receive first configuration information; and the processing unit is further configured to determine the first priority based on the first configuration information.

26. The apparatus according to claim 25, wherein that the processing unit is further configured to determine the first priority based on the first configuration information comprises:

configuring a first priority value and a first priority threshold of the first MUSIM gap based on the first configuration information; and
the processing unit is configured to determine the first priority based on the first priority value and the first priority threshold.

27. The apparatus according to claim 26, wherein that the processing unit is further configured to determine the first priority based on the first configuration information comprises:

configuring a second priority value of the first MUSIM gap based on the first configuration information; and
the processing unit is configured to determine the first priority based on the second priority value.

28. The apparatus according to any one of claims 23 to 27, wherein

the interface unit is further configured to receive second configuration information, wherein the second configuration information configures a first offset; and
that the processing unit is configured to determine whether to deactivate the first MUSIM gap comprises:
the processing unit is configured to determine, at a first moment, whether to deactivate the first MUSIM gap, wherein the first moment is before a start moment of the first MUSIM gap, and a time interval between the first moment and the start moment is greater than or equal to the first offset.

29. The apparatus according to claim 23 or 28, wherein that the processing unit is configured to determine whether to deactivate the first MUSIM gap comprises:
performing MUSIM gap measurement in a non-overlapping time period between the first MUSIM gap and the first time domain resource, and deactivating a part of the first MUSIM gap.

30. The apparatus according to claim 29, wherein that the processing unit is configured to perform MUSIM gap measurement comprises:
when the non-overlapping time period is greater than a first threshold, performing MUSIM gap measurement, wherein the non-overlapping time period comprises a time period from the start moment of the first MUSIM gap to a start moment of the first time domain resource.

31. The apparatus according to claim 29, wherein that the processing unit is configured to perform MUSIM gap measurement comprises:
when the non-overlapping time period is greater than a second threshold, performing MUSIM gap measurement, wherein the non-overlapping time period comprises a time period from an end moment of the first time domain resource to an end moment of the first MUSIM gap.

32. The apparatus according to claim 23 or 28, wherein that the processing unit is configured to determine whether to deactivate the first MUSIM gap comprises:
when a time period from a start moment of the first time domain resource to an end moment of the first MUSIM gap is less than a third threshold, performing MUSIM gap measurement on a part of the first MUSIM gap.

33. A communication apparatus, wherein the apparatus comprises a processing unit, wherein

the processing unit is configured to determine a second multiple subscriber identity module MUSIM gap; and
the processing unit is configured to: when the second MUSIM gap and a second time domain resource overlap, determine, based on a third priority and/or a fourth priority, whether to deactivate the second MUSIM gap, wherein a duration of the second time domain resource is a running duration of a first timer in discontinuous reception, the third priority is a priority of the second MUSIM gap, and the fourth priority is a priority of a channel or a signal that triggers or is associated with starting or restarting of the first timer.

34. The apparatus according to claim 33, wherein that the processing unit is configured to determine, based on a third priority and/or a fourth priority, whether to deactivate the second MUSIM gap comprises:
when the third priority is a low priority and the fourth priority is a high priority, deactivating the second MUSIM gap.

35. The apparatus according to claim 33, wherein that the processing unit is configured to determine, based on a third priority and/or a fourth priority, whether to deactivate the second MUSIM gap comprises:
when the third priority is a low priority, deactivating the second MUSIM gap.

36. The apparatus according to claim 33, wherein that the processing unit is configured to determine, based on a third priority and/or a fourth priority, whether to deactivate the second MUSIM gap comprises:
when the fourth priority is a high priority, deactivating the second MUSIM gap.

37. The apparatus according to any one of claims 33 to 36, wherein the apparatus further comprises an interface unit, wherein

the interface unit is configured to receive third configuration information; and
the processing unit is further configured to determine the third priority based on the third configuration information.

38. The apparatus according to claim 37, wherein that the processing unit is further configured to determine the third priority based on the third configuration information comprises:

configuring a third priority value and a second priority threshold of the second MUSIM gap based on the third configuration information; and
the processing unit is further configured to determine the third priority based on the third priority value and the second priority threshold.

39. The apparatus according to claim 37, wherein that the processing unit is further configured to determine the third priority based on the third configuration information comprises:

configuring a fourth priority value of the second MUSIM gap based on the third configuration information; and
the processing unit is further configured to determine the third priority based on the fourth priority value.

40. The apparatus according to any one of claims 37 to 39, wherein

the interface unit is further configured to receive fourth configuration information, wherein the fourth configuration information configures a second offset; and
the processing unit is configured to determine, at a second moment, whether to deactivate the second MUSIM gap, wherein the second moment is before a start moment of the second MUSIM gap, and a time interval between the second moment and the start moment is greater than or equal to the second offset.

41. The apparatus according to claim 33 or 40, wherein that the processing unit is configured to determine whether to deactivate the second MUSIM gap comprises:
performing MUSIM gap measurement in a non-overlapping time period between the second MUSIM gap and the second time domain resource, and deactivating a part of the second MUSIM gap.

42. The apparatus according to claim 41, wherein that the processing unit is configured to perform MUSIM gap measurement comprises:
when the non-overlapping time period is greater than a first threshold, performing MUSIM gap measurement, wherein the non-overlapping time period comprises a time period from the start moment of the second MUSIM gap to a start moment of the second time domain resource.

43. The apparatus according to claim 41, wherein that the processing unit is configured to perform MUSIM gap measurement comprises:
when the non-overlapping time period is greater than a second threshold, performing MUSIM gap measurement, wherein the non-overlapping time period comprises a time period from an end moment of the second time domain resource to an end moment of the second MUSIM gap.

44. The apparatus according to claim 33 or 40, wherein that the processing unit is configured to determine whether to deactivate the second MUSIM gap comprises:
when a time period from a start moment of the second time domain resource to an end moment of the second MUSIM gap is less than a third threshold, performing MUSIM gap measurement on a part of the second MUSIM gap.

45. A communication apparatus, comprising a processor, wherein the processor is coupled to a memory, the memory is configured to store a computer program or instructions, and the processor is configured to execute the computer program or the instructions in the memory, to enable the apparatus to perform the method according to any one of claims 1 to 10 or the method according to any one of claims 11 to 22.

46. A computer-readable storage medium, wherein the computer-readable storage medium stores a computer program or instructions, and when the computer program or the instructions are run on a computer, the computer is enabled to perform the method according to any one of claims 1 to 10, or the apparatus is enabled to perform the method according to any one of claims 11 to 22.

100

SIM 112

SIM 111

Terminal device
110

Network device
120

Network device
130

FIG. 1

Periodic MUSIM gap

Gap length

Gap period

Time

FIG. 2

FIG. 3

Data transmission rate (60 FPS)

16.67 ms  16.67 ms  16.67 ms  16.67 ms  16.67 ms

Time

Conflicting time domain

MUSIM gap (Pattern 0)

Gap length = 6 ms

Gap period = 40 ms    Gap period = 40 ms

Time

400

S410: Determine a first multiple subscriber identity module MUSIM gap

S420: When the first MUSIM gap and a first time domain resource for carrying a channel or a signal overlap, determine, based on a first priority and a second priority, whether to deactivate the first MUSIM gap

FIG. 4

500

| Network device | | Terminal device |

S530: First configuration information, where the first configuration information indicates a first priority

S540: Second configuration information, where the second configuration information configures a first offset

S510: Determine a first multiple subscriber identity module MUSIM gap

S550: Determine whether the first MUSIM gap and a first time domain resource overlap

Yes

S520: When the first MUSIM gap and the first time domain resource overlap, determine whether to deactivate the first MUSIM gap

FIG. 5

FIG. 6

FIG. 7

PDCCH or CG PUSCH     PUSCH     Running duration of a
DRX retransmission
uplink timer

Active state

Inactive state

Time

Running duration
of a DRX
retransmission
round trip time
uplink timer

MUSIM gap

| 1 |     | 2 |

Gap period     Time

FIG. 8

900

S910: Determine a second multiple subscriber
identity module MUSIM gap

S920: When the second MUSIM gap and a second
time domain resource overlap, determine, based on
a third priority and/or a fourth priority, whether to
deactivate the second MUSIM gap

FIG. 9

1000

Network device

Terminal device

S1030: Third configuration information,
where the third configuration information
indicates a third priority

S1040: Fourth configuration information,
where the fourth configuration information
configures a second offset

S1010: Determine a second multiple subscriber
identity module MUSIM gap

S1050:
Determine whether the second
MUSIM gap and a second time
domain resource
overlap

Yes

S1020: When the second MUSIM gap and the
second time domain resource overlap, determine
whether to deactivate the second MUSIM gap

FIG. 10

1100

Network device

Terminal device

S1110: When a third MUSIM gap and a third time domain resource overlap, determine whether to deactivate the third MUSIM gap

S1120: First downlink control information, where the first downlink control information indicates whether to deactivate the third MUSIM gap

S1130: The terminal device deactivates the third MUSIM gap or maintains an active state of the third MUSIM gap based on the first downlink control information

FIG. 11

Communication apparatus 1200

Interface unit 1210

Processing unit 1220

FIG. 12

Communication apparatus 1300

Processor
1310

Memory 1320

Transceiver
1330

FIG. 13

Chip system 1400

Logic circuit 1410

Input/Output
interface 1420

FIG. 14

1500

```
┌─────────────────────────────────────┐
│ S1510: Determine a first multiple    │
│ subscriber identity module MUSIM gap │
└─────────────────────────────────────┘
                    │
                    ▼
┌─────────────────────────────────────┐
│ S1520: When the first MUSIM gap and a│
│ first time domain resource for carrying a │
│ channel or a signal overlap, determine,│
│ based on a first priority and a second│
│ priority, whether to deactivate the first│
│ MUSIM gap                            │
└─────────────────────────────────────┘
```

| S1530a: Perform MUSIM gap measurement in a non-overlapping time period between the first MUSIM gap and the first time domain resource, and deactivate a time period of the first MUSIM gap in which MUSIM gap measurement is not performed | S1530b: When a time period from a start moment of the first MUSIM gap to an end moment of the first MUSIM gap is less than a third threshold, perform MUSIM gap measurement on a part of the first MUSIM gap |

FIG. 15

1600

```
┌─────────────────────────────────────┐
│ S1610: Determine a second multiple   │
│ subscriber identity module MUSIM gap │
└─────────────────────────────────────┘
                    │
                    ▼
┌─────────────────────────────────────┐
│ S1620: When the second MUSIM gap and │
│ a second time domain resource overlap,│
│ determine, based on a third priority and/or a│
│ fourth priority, whether to deactivate the│
│ second MUSIM gap                     │
└─────────────────────────────────────┘
```

| S1630a: Perform MUSIM gap measurement in a non-overlapping time period between the second MUSIM gap and the second time domain resource, and deactivate a time period of the second MUSIM gap in which MUSIM gap measurement is not performed | S1630b: When a time period from a start moment of the second MUSIM gap to an end moment of the second MUSIM gap is less than a third threshold, perform MUSIM gap measurement on a part of the second MUSIM gap |

FIG. 16

(a)

(b)

(c)

PDSCH or PDSCH

First MUSIM gap/
Second MUSIM gap

FIG. 17

## INTERNATIONAL SEARCH REPORT

| International application No. |
|---|
| **PCT/CN2023/118407** |

**A. CLASSIFICATION OF SUBJECT MATTER**

H04W 72/0446(2023.01)i

According to International Patent Classification (IPC) or to both national classification and IPC

**B. FIELDS SEARCHED**

Minimum documentation searched (classification system followed by classification symbols)

IPC: H04W, H04L

Documentation searched other than minimum documentation to the extent that such documents are included in the fields searched

Electronic data base consulted during the international search (name of data base and, where practicable, search terms used)

CNTXT, ENTXTC, ENTXT, 3GPP: 多用户身份模块, 间隙, 资源, 重叠, 优先级, 去激活; MUSIM, gap, resource, overlap, priority, deactivation

**C. DOCUMENTS CONSIDERED TO BE RELEVANT**

| Category* | Citation of document, with indication, where appropriate, of the relevant passages | Relevant to claim No. |
|---|---|---|
| X | CN 103167610 A (BROADCOM CORP.) 19 June 2013 (2013-06-19) description, paragraphs 44-102, and figures 1-16 | 1-5, 23-27, 45, 46 |
| Y | CN 103167610 A (BROADCOM CORP.) 19 June 2013 (2013-06-19) description, paragraphs 44-102, and figures 1-16 | 11-17, 33-39 |
| Y | US 2017230932 A1 (QUALCOMM INCORPORATED) 10 August 2017 (2017-08-10) claims 30-38 | 11-17, 33-39 |
| A | US 2021377978 A1 (QUALCOMM INCORPORATED) 02 December 2021 (2021-12-02) entire document | 1-46 |
| A | WO 2022184101 A1 (VIVO COMMUNICATION TECHNOLOGY CO., LTD.) 09 September 2022 (2022-09-09) entire document | 1-46 |
| A | VIVO. "Discussion on MUSIM gap priority" *3GPP TSG-RAN WG2 Meeting #118e R2-2204896*, 20 May 2022 (2022-05-20), entire document | 1-46 |

☐ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 November 2023** | **22 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/118407**

| Patent document cited in search report | | | Publication date (day/month/year) | Patent family member(s) | | | Publication date (day/month/year) |
|---|---|---|---|---|---|---|---|
| CN | 103167610 | A | 19 June 2013 | US | 2013150013 | A1 | 13 June 2013 |
| | | | | KR | 101455097 | B1 | 03 November 2014 |
| | | | | CN | 103167481 | A | 19 June 2013 |
| US | 2017230932 | A1 | 10 August 2017 | WO | 2017136078 | A1 | 10 August 2017 |
| | | | | TW | 201729616 | A | 16 August 2017 |
| US | 2021377978 | A1 | 02 December 2021 | EP | 4158991 | A1 | 05 April 2023 |
| | | | | WO | 2021242536 | A1 | 02 December 2021 |
| | | | | CN | 115769664 | A | 07 March 2023 |
| | | | | IN | 202247053842 | A | 23 September 2022 |
| WO | 2022184101 | A1 | 09 September 2022 | CN | 115038098 | A | 09 September 2022 |

Form PCT/ISA/210 (patent family annex) (July 2022)

**REFERENCES CITED IN THE DESCRIPTION**

**Patent documents cited in the description**

- CN 202211196995
- CN 202310247905